# EUROPEAN PATENT SPECIFICATION

(11) **EP 1 666 528 B1**
(45) Date of publication and mention of the grant of the patent: **20.02.2008**
(21) Application number: 06003597.9
(22) Date of filing: 26.12.2002
(51) Int. Cl.: C08L 23/08, C08L 83/04, C08K 5/5419, C09K 3/10, H01M 8/02, C08L 23/16, G11B 33/14

(54) **Rubber composition for top cover gaskets for hard disk drives**
Kautschukzusammensetzung für Festplattenlaufwerksdeckeldichtungsteil
Composition de caoutchouc pour piece de join statique de révètement superieur de lecteur de disque dur

(30) Priority: 28.12.2001 JP 2001400861
(43) Date of publication of application: 07.06.2006
(62) Divisional of application: 02790896.1
(73) Proprietor: Mitsui Chemicals, Inc., Tokyo (JP); NOK Corporation, Minato-ku Tokyo 105-8585 (JP)
(72) Inventor: Kudo, Masashi, Fujisawa-shi Kanagawa 251-0042 (JP); Senda, Kazuhisa, Fujisawa-shi Kanagawa 251-0042 (JP); Kojima, Yoshifumi, Fujisawa-shi Kanagawa 251-0042 (JP); Matsunaga, Shin-ya, Ichihara-shi Chiba 299-0108 (JP); Hakuta, Takashi, Ichihara-shi Chiba 299-0108 (JP); Kawasaki, Masaaki, Ichihara-shi Chiba 299-0108 (JP)
(74) Representative: HOFFMANN EITLE

(56) References cited:
- EP-A- 0 855 426
- EP-A- 1 088 855
- US-A- 5 282 101
- US-A- 5 793 566
- PATENT ABSTRACTS OF JAPAN vol. 2002, no. 03, 3 April 2002 (2002-04-03) & JP 2001 311470 A (NOK CORP), 9 November 2001 (2001-11-09)

## Description

### FIELD OF THE INVENTION

The present invention relates to the use of a rubber composition for preparing top cover gaskets for hard disk drives.

The present invention also relates to a high performance hard disk drive (capable of high rotation) or a hard disk drive used in a high-temperature environment such as in cars.

### BACKGROUND OF THE INVENTION

The present inventors have found that a rubber composition comprising a specific ethylene/α-olefin/non-conjugated polyene copolymer [A], a specific organopolysiloxane [B], an SiH group-containing compound [C] that has two or more SiH groups in the molecule, and optionally a catalyst [D] and a reaction inhibitor [E], exhibits excellent high-speed moldability and is suitable for preparing top cover gaskets for hard disk drives with superior resistances to heat, acids and gas permeation. The present invention has been completed based on this finding.

Meanwhile, the recent miniaturization and upgrading of electronic equipment products have created a demand for smaller and thinner components. However, small-sized components suffer bad workability in the assembly into products. Therefore, it is required that various components are integrated or combined together. Moreover, improvements are required for characteristics needed with electronic equipment products such as sealing properties, non-outgassing properties and quality.

Gaskets for electronic memory devices, particularly for hard disk drives, are made of rubbers or urethane foam sheets. They are attached to the devices by being interposed between metal covers of, for example, stainless steel or aluminum. Assembling can be facilitated by integrating a rubber material (mainly fluororubber) with the metal cover such as of stainless steel. Therefore, it has been proposed to join a rubber and a metal by an adhesive (Japanese Patent No. 2517797). EPDM has been in practical use as a rubber material in the similar application.

However, recent product miniaturization and accompanying trends of reduced cover weight and thickness have made it requisite that the sealing gaskets have low reaction force (low hardness). When the gasket has a high hardness (reaction force), it can cause deformation of a light and thin cover in the assembly of a product, leading to inadequate sealing properties.

Other gaskets proposed so far include those comprising styrene thermoplastic elastomers (Japanese Patent No. 2961068). The patent describes that the styrene thermoplastic elastomers do not require vulcanization unlike the rubber materials, so that the production can be facilitated. It also describes that the styrene thermoplastic elastomers are recyclable and the cost can be reduced.

In the above technique, thin, flexible and sticky gaskets have to be fixed by any means prior to assembly; otherwise their workability in the practical assembly of hard disk drives will be very bad. The above patent solves this problem by injection molding gaskets from a styrene elastomer onto a frame and assembling the frame between a box and a cover or lid of hard disk drive or the like. Accordingly, a third member, the frame in this case, is needed. Moreover, recent hard disk drives are capable of higher performance (higher rotation) to cause generation of heat. Further, such devices are often employed in automobile applications such as in cars. Therefore, gaskets in these devices tend to be exposed to high-temperature environments (particularly 80°C or above). Such conditions are close to or beyond the limits for the conventional styrene thermoplastic elastomers to be appropriately used. That is, when the gaskets of styrene thermoplastic elastomers are subjected to a prolonged compression stress at high temperatures, permanent deformation occurs to lower the sealing properties. Because of their characteristics, the thermoplastic elastomers are generally more prone to suffer great permanent deformation at high temperatures than rubbers.

Accordingly, a HDD cover gasket is demanded which has a low hardness for high sealing properties, comprises a thermosetting elastomer in order to ensure good sealing performance even at high temperatures, and can be integrally formed with a cover to allow for easy and efficient assembly.

The present inventors carried out earnest studies of a HDD cover gasket that has improved high-temperature performance, enables the simplified production (easy assembly) and achieves higher sealing effects and quality, to meet the requirements from product miniaturization and reduction of cover weight and thickness. As a result, they have developed a rubber composition described below that has a specific composition. It has been found that the composition can give a gasket which, when integrated with a cover by an adhesive, can achieve enhanced sealing properties at high temperatures. The integration of the gasket and cover is also possible by molding the gasket to an adhesive-coated cover that has been inserted in the mold. Moreover, the use of the composition has been found to lead to simplification of production steps. The present invention has been completed based on this finding.

Meanwhile, WO00/55251 discloses a crosslinkable rubber composition for hermetic seal packing. This composition comprises an ethylene/α-olefin/non-conjugated polyene random copolymer rubber having constituent units derived from at least one norbornene compound represented by the following formula [I] or [II], and an SiH group-containing compound having at least two SiH groups in the molecule: 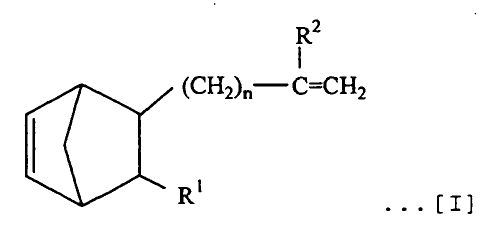 wherein n is an integer of 0 to 10, R¹ is a hydrogen atom or an alkyl group of 1 to 10 carbon atoms, and R² is a hydrogen atom or an alkyl group of 1 to 5 carbon atoms; 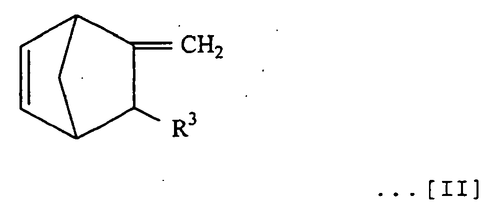 wherein R³ is a hydrogen atom or an alkyl group of 1 to 10 carbon atoms.

The present invention has been made to solve the aforesaid conventional problems.

The object of the present invention is to provide the use of a crosslinkable rubber composition for preparing top cover gaskets for hard disk drives that has excellent high-speed moldability and can give HDD top cover gaskets having low hardness, high resistances to heat and compression set, and excellent long-term sealing properties. It is a still further object of the present invention to provide a HDD top cover gasket obtained by crosslinking the rubber composition, a HDD top cover gasket material comprising the rubber composition, and a hard disk drive (HDD) including the top cover gasket.

### DISCLOSURE OF THE INVENTION

The rubber composition as used for preparing HDD top cover gaskets according to the present invention comprises:
an ethylene/α-olefin/non-conjugated polyene copolymer [A];
an organopolysiloxane [B] having an average composition formula (I) of R¹ₜSiO_{(4-t)/2} wherein R¹ is an unsubstituted or substituted monovalent hydrocarbon group and t is a number ranging from 1.9 to 2.1; and
an SiH group-containing compound [C];
the copolymer [A] and organopolysiloxane [B] having a weight ratio ([A]:[B]) of 100:0 to 5:95.

The ethylene/α-olefin/non-conjugated polyene copolymer [A] generally has:
(i) a mass ratio of ethylene to an α-olefin of 3 to 20 carbon atoms (ethylene/α-olefin) of 35/65 to 95/5;
(ii) an iodine value of 0.5 to 50;
(iii) an intrinsic viscosity [η] of 0.01 to 5.0 dl/g as measured in decalin at 135°C; and
(iv) constituent units of non-conjugated polyene derived from at least one norbornene compound represented by the following formula [I] or [II]: 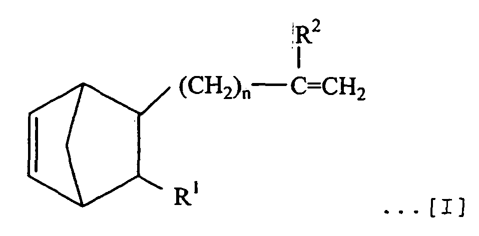 wherein n is an integer of 0 to 10, R¹ is a hydrogen atom or an alkyl group of 1 to 10 carbon atoms, and R² is a hydrogen atom or an alkyl group of 1 to 5 carbon atoms; 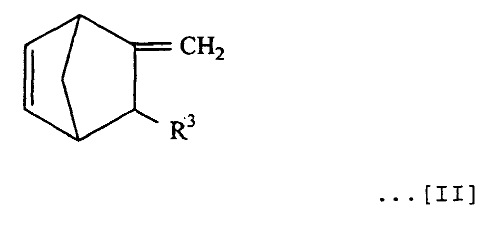 wherein R³ is a hydrogen atom or an alkyl group of 1 to 10 carbon atoms.

The rubber composition may contain a catalyst [D] and optionally a reaction inhibitor [E] in addition to the ethylene/α-olefin/non-conjugated polyene copolymer [A], the organopolysiloxane [B] and the SiH group-containing compound [C].

The SiH group-containing compound [C] generally has two or more SiH groups in the molecule.

The rubber composition preferably contains the SiH group-containing compound [C] in an amount of 0.1 to 100 parts by weight based on 100 parts by weight of the total of the ethylene/α-olefin/non-conjugated polyene copolymer [A] and the organopolysiloxane [B].

The rubber composition preferably contains the SiH group-containing compound [C] in an amount that gives 0.2 to 10 silicon-bonded hydrogen atoms per one aliphatic unsaturated bond in the ethylene/α-olefin/non-conjugated polyene copolymer [A] and the organopolysiloxane [B].

The catalyst [D] is preferably a platinum catalyst.

The HDD top cover gaskets according to the present invention comprises the aforesaid rubber composition for HDD top cover gaskets.

The HDD top cover gasket according to the present invention is obtained from the aforesaid rubber composition for HDD top cover gaskets.

The HDD top cover gasket may be obtained by liquid injection molding, injection molding or compression molding of the rubber composition for HDD top cover gaskets.

The HDD top cover gasket according to the present invention is preferably integrated with a HDD top cover by an adhesive.

The hard disk drive according to the present invention includes any of the HDD top cover gaskets described above.

The rubber composition for HDD top cover gaskets as used according to the present invention preferably gives a cured product of low hardness having a durometer A hardness of 45 or less.

The present invention provides the use of a crosslinkable rubber composition that has excellent high-speed moldability and can give HDD top cover gaskets having low hardness, high heat resistance and high compression set resistance and exhibiting excellent sealing properties over a prolonged period; a HDD top cover gasket obtained by crosslinking the rubber composition; a HDD top cover gasket material comprising the rubber composition; and a hard disk drive including the top cover gasket.

### BRIEF DESCRIPTION OF THE DRAWINGS

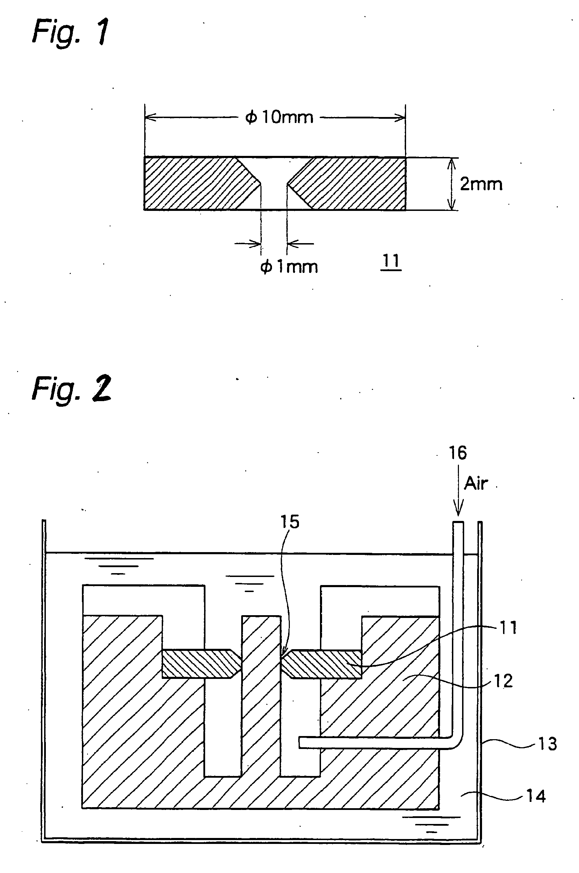

Fig. 1 is a sectional view of a specimen used in sealing tests in Examples 9-12 and Comparative Examples 4 and 5; and
Fig. 2 is a schematic view illustrating the sealing test for the specimen shown in Fig. 1.

### PREFERRED EMBODIMENTS OF THE INVENTION

Hereinbelow, the rubber composition as used for preparing HDD top cover gaskets according to the present invention and uses thereof will be described in detail.

In the following the rubber composition as used for preparing HDD top cover gaskets according to the present invention will be discussed

### [Rubber Composition]

The rubber composition as used for preparing HDD top cover gaskets of the present invention comprises:
an ethylene/α-olefin/non-conjugated polyene copolymer [A];
an organopolysiloxane [B]having an average composition formula (I) of R¹ₜSiO_{(4-t)/2} wherein R¹ is an unsubstituted or substituted monovalent hydrocarbon group and t is a number ranging from 1.9 to 2.1;
an SiH group-containing compound [C] which preferably has two or more SiH groups in the molecule; and optionally
a catalyst [D] and a reaction inhibitor [E].

The rubber composition desirably contains the ethylene/α-olefin/non-conjugated polyene copolymer [A] and the organopolysiloxane [B] in a weight ratio ([A] : [B]) of 100: 0 to 5:95, preferably 100:0 to 60:40, and more preferably 100:0 to 70:30 ([A]+[B]=100 parts by weight). It is an embodiment of the present invention that the ethylene/α-olefin/non-conjugated polyene copolymer [A] and the organopolysiloxane [B] have a weight ratio ([A]:[B]) of 100:0.

The rubber composition is preferably a crosslinkable composition.

### (Ethylene/α-olefin/non-conjugated polyene copolymer [A])

The ethylene/α-olefin/non-conjugated polyene copolymer [A] used in the present invention is a copolymer of ethylene, an α-olefin of 3 to 20 carbon atoms and a non-conjugated polyene. In a preferred embodiment, the ethylene/α-olefin/non-conjugated polyene copolymer [A] is a random copolymer.

The α-olefins of 3 to 20 carbon atoms include propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene and 12-ethyl-1-tetradecene. Of the α-olefins, those of 3 to 10 carbon atoms are preferred. In particular, propylene, 1-butene, 1-hexene and 1-octene are preferably used.

These α-olefins may be used singly or in combination of two or more kinds.

The non-conjugated polyene used in the present invention is a norbornene compound represented by the following formula [I] or [II] : 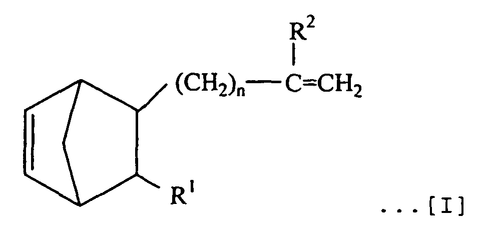 wherein:
n is an integer of 0 to 10;
R¹ is a hydrogen atom or an alkyl group of 1 to 10 carbon atoms which may be selected from, for example, methyl, ethyl, propyl, isopropyl, n-butyl, isobutyl, sec-butyl, t-butyl, n-pentyl, isopentyl, t-pentyl, neopentyl, hexyl, isohexyl, heptyl, octyl, nonyl and decyl groups; and
R² is a hydrogen atom or an alkyl group of 1 to 5 carbon atoms which may be selected from, for example, those alkyl groups listed for R¹ whose carbon atoms range from 1 to 5; 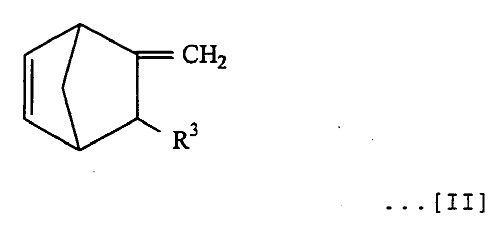
wherein:
R³ is a hydrogen atom or an alkyl group of 1 to 10 carbon atoms which may be selected from, for example, those alkyl groups listed for R¹.

Exemplary norbornene compounds having the formula [I] or [II] include 5-methylene-2-norbornene, 5-vinyl-2-norbornene, 5-(2-propenyl)-2-norbornene, 5-(3-butenyl)-2-norbornene, 5-(1-methyl-2-propenyl)-2-norbornene, 5-(4-pentenyl)-2-norbornene, 5-(1-methyl-3-butenyl)-2-norbornene, 5-(5-hexenyl)-2-norbornene, 5-(1-methyl-4-pentenyl)-2-norbornene, 5-(2,3-dimethyl-3-butenyl)-2-norbornene, 5-(2-ethyl-3-butenyl)-2-norbornene, 5-(6-heptenyl)-2-norbornene, 5-(3-methyl-5-hexenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene and 5-(1,2,3-trimethyl-4-pentenyl)-2-norbornene. Of these, 5-vinyl-2-norbornene, 5-methylene-2-norbornene, 5-(2-propenyl)-2-norbornene, 5-(3-butenyl)-2-norbornene, 5-(4-pentenyl)-2-norbornene, 5-(5-hexenyl)-2-norbornene, 5-(6-heptenyl)-2-norbornene and 5-(7-octenyl)-2-norbornene are preferred. These norbornene compounds may be used singly or in combination of two or more kinds.

The norbornene compound such as 5-vinyl-2-norbornene may be used in combination with a non-conjugated polyene described below without adversely affecting the objects of the present invention.

The optional non-conjugated polyenes include:
linear non-conjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene and 7-methyl-1,6-octadiene;
cyclic non-conjugated dienes such as methyltetrahydroindene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene and dicyclopentadiene; and
trienes such as 2,3-diisopropylidene-5-norbornene, 2-ethylidene-3-isopropylidene-5-norbornene and 2-propenyl-2,2-norbornadiene.

The ethylene/α-olefin/non-conjugated polyene copolymer [A] comprising the above components has the following properties.

### (i) Mass ratio of ethylene to the α-olefin of 3 to 20 carbon atoms (ethylene/α-olefin)

The ethylene/α-olefin/non-conjugated polyene copolymer [A] contains units (a) derived from ethylene and units (b) derived from the α-olefin of 3 to 20 carbon atoms (hereinafter, sometimes referred to simply as the "α-olefin") in a mass ratio [(a)/(b)] of 35/65 to 95/5, preferably 40/60 to 90/10, more preferably 45/55 to 85/15, and particularly preferably 50/50 to 80/20.

The mass ratio in the above ranges enables the rubber composition to give a crosslinked rubber molded product that has high thermal aging resistance, strength characteristics and rubber elasticity as well as excellent low-temperature resistance and processability.

### (ii) Iodine value

The ethylene/α-olefin/non-conjugated polyene copolymer [A] has an iodine value of 0.5 to 50 (g/100 g), preferably 1 to 45 (g/100 g), more preferably 1 to 43 (g/100 g), and particularly preferably 3 to 40 (g/100 g).

When the iodine value falls in the above ranges, the rubber composition can be crosslinked with high efficiency and give a crosslinked rubber molded product that has high resistances to compression set and environmental degradation (thermal aging resistance). Iodine values over the above ranges (particularly exceeding 50) lead to an excessive crosslinking density, and therefore mechanical characteristics such as tensile elongation may be lowered.

### (iii) Intrinsic viscosity

The ethylene/α-olefin/non-conjugated polyene copolymer [A] desirably ranges in intrinsic viscosity [η] from 0.01 to 5.0 dl/g, preferably from 0.03 to 4.0 dl/g, more preferably from 0.05 to 3.5 dl/g, and particularly preferably from 0.07 to 3.0 dl/g as measured in decalin at 135°C. In the case where the rubber composition is to be liquid injection molded, the intrinsic viscosity [η] of the ethylene/α-olefin/non-conjugated polyene copolymer [A] as measured in decalin at 135°C is desirably 0.01 to 1.5 dl/g, preferably 0.03 to 1.3 dl/g, more preferably 0.05 to 1.2 dl/g, and particularly preferably 0.07 to 1.1 dl/g. In a preferred embodiment, the intrinsic viscosity is at most 0. 5 dl/g or below, and preferably less than 0.3 dl/g. This is particularly preferable in the case of liquid injection molding (LIM).

The intrinsic viscosity [η] in the above ranges enables the rubber composition to exhibit excellent strength characteristics and compression set resistance and give a crosslinked rubber molded product having good processability.

The ethylene/α-olefin/non-conjugated polyene copolymer [A] may be prepared by the known methods, including those described in POLYMER PRODUCTION PROCESS (P. 365-378, published from KOGYO CHOSAKAI PUBLISHING CO., LTD.) and JP-A-H09-71617, JP-A-H09-71618, JP-A-H09-208615, JP-A-H10-67823, JP-A-H10-67824 and JP-A-H10-110054 by the present applicant.

The ethylene/α-olefin/non-conjugated polyene copolymer [A] can be produced using a catalyst. Particularly preferred olefin polymerization catalysts include:
Ziegler catalysts composed of a transition metal compound such as vanadium (V), zirconium (Zr) or titanium (Ti) and an organoaluminum compound (organoaluminum oxy-compound) ; and
Metallocene catalysts composed of a metallocene compound of a transition metal selected from Group IVB of the periodic table, and an organoaluminum oxy-compound or an ionizing ionic compound.

The ethylene/α-olefin/non-conjugated polyene copolymer [A] is desirably prepared using a catalyst which contains the compounds (H) and (I) described below in major proportions. The use of this catalyst is advantageous in that the resultant ethylene/α-olefin/non-conjugated polyene copolymer [A] will contain an insoluble component in boiling xylene in an amount of 1% or less.

The ethylene/α-olefin/non-conjugated polyene copolymer [A] whose xylene insoluble content is 1% or less may be prepared by random copolymerization of ethylene, the α-olefin of 3 to 20 carbon atoms and the norbornene compound having the formula [I] or [II] in the presence of the catalyst mainly containing the compounds (H) and (I), and under the conditions that a polymerization temperature is from 30 to 60°C, particularly from 30 to 59°C, a polymerization pressure rages from 4 to 12 kgf/cm², particularly from 5 to 8 kgf/cm², and a molar ratio of the non-conjugated polyene to the ethylene used (non-conjugated polyene/ethylene) is 0.01 to 0.2. The copolymerization is preferably carried out in a hydrocarbon solvent.

The compound (H) is a soluble vanadium compound represented by the formula VO(OR)ₙX₃₋ₙ (wherein R is a hydrocarbon group, X is a halogen atom, and n is 0 or an integer of 1 to 3) or a vanadium compound having the formula VX₄ (wherein X is a halogen atom).

The soluble vanadium compound (H) is a component which is soluble in the hydrocarbon solvent in the polymerization system. Specific examples thereof include vanadium compounds represented by VO(OR)ₐX_{b} or V(OR)_{c}X_{d} (wherein R is a hydrocarbon group, 0≤a≤3, 0≤b≤3, 2≤a+b≤3, 0≤c≤4, 0≤d≤4 and 3≤c+d≤4) and adducts thereof with an electron donor.

More specific examples include VOCl₃, VO(OC₂H₅)Cl₂, VO(OC₂H₅)₂Cl, VO(O-iso-C₃H₇)Cl₂, VO(O-n-C₄H₉)Cl₂, VO(OC₂H₅)₃, VOBr₃, VCl₄, VOCl₃, VO(O-n-C₄H₉)₃ and VCl₃·2OC₆H₁₂OH.

The compound (I) is an organoaluminum compound represented by the formula R'ₘAlX'₃₋ₘ (wherein R' is a hydrocarbon group, X' is a halogen atom, and m ranges from 1 to 3).

Exemplary organoaluminum compounds (I) include:
trialkyl aluminums such as triethyl aluminum, tributyl aluminum and triisopropyl aluminum;
dialkyl aluminum alkoxides such as diethyl aluminum ethoxide and dibutyl aluminum butoxide;
alkyl aluminum sesquialkoxides such as ethyl aluminum sesquiethoxide and butyl aluminum sesquibutoxide;
partially alkoxylated alkyl aluminums with such an average composition as R¹_{0.5}Al(OR¹)_{0.5};
dialkyl aluminum halides such as diethyl aluminum chloride, dibutyl aluminum chloride and diethyl aluminum bromide;
alkyl aluminum sesquihalides such as ethyl aluminum sesquichloride, butyl aluminum sesquichloride and ethyl aluminum sesquibromide;
partially halogenated alkyl aluminums such as alkyl aluminum dihalides, including ethyl aluminum dichloride, propyl aluminum dichloride and butyl aluminum dibromide;
dialkyl aluminum hydrides such as diethyl aluminum hydride and dibutyl aluminum hydride;
partially hydrogenated alkyl aluminums such as alkyl aluminum dihydrides, including ethyl aluminum dihydride and propyl aluminum dihydride; and
partially alkoxylated and halogenated alkyl aluminums, such as ethyl aluminum ethoxychloride, butyl aluminum butoxychloride and ethyl aluminum ethoxybromide.

In the present invention, the compound (H) is preferably the soluble vanadium compound VOCl₃, and the compound (I) is preferably a blend of Al(OC₂H₅)₂Cl/Al₂(OC₂H₅)₃Cl₃ (in a blend ratio of 1/5 or more). This combination of the catalyst components is advantageous in that the resultant ethylene/α-olefin/non-conjugated polyene copolymer [A] will have an insoluble content of 1% or less after extraction by Soxhlet extractor (solvent: boiling xylene, extraction time: 3 hours, mesh: 325).

### (Organopolysiloxane [B])

The organopolysiloxane [B] has a function of providing enhanced thermal aging resistance of the rubber composition. That is, it contributes to improvement of thermal aging resistance of the HDD top cover gaskets obtained from the composition. The organopolysiloxane [B] is represented by the following average composition formula (I):

R¹ₜSiO_{(4-t)/2} (I)

wherein R¹ is an unsubstituted or substituted monovalent hydrocarbon group, and is generally a monovalent hydrocarbon group of 1 to 10, particularly preferably 1 to 8 carbon atoms. Specific examples of the hydrocarbon groups include:
alkyl groups such as methyl, ethyl, propyl, butyl, hexyl and octyl groups;
cycloalkyl groups such as cyclopentyl and cyclohexyl groups;
alkenyl groups such as vinyl, allyl and propenyl groups; cycloalkenyl groups;
aryl groups such as phenyl and tolyl groups;
aralkyl groups such as benzyl and phenylethyl groups; and
halides or cyanides of the above hydrocarbon groups in which the hydrogen atoms are partially or totally substituted with a chlorine atom, a fluorine atom or an organic group such as a cyano group.

In particular, the organopolysiloxane preferably has a main chain comprising dimethylsiloxane units. Also preferably, part of the main chain contains a phenyl group, a vinyl group or a 3,3,3-trifluoropropyl group; in other words, a diphenylsiloxane unit, a methylvinylsiloxane unit or a methyl-3,3,3-trifluoropropylsiloxane unit is preferably introduced to part of the dimethylpolysiloxane main chain.

In the above case, the organopolysiloxane [B] preferably contains two or more unsaturated aliphatic groups, such as alkenyl or cycloalkenyl groups, in the molecule. Preferably, 0.01 to 20 mol%, particularly 0.02 to 10 mol% of R¹ is the unsaturated aliphatic groups, particularly vinyl groups.

The unsaturated aliphatic groups may be present at the ends, in the middle, or both at an end and in the middle of the molecular chain. However, they are preferably present at least in a terminal position of the molecular chain.

In the formula (I), t is a positive number of 1.9 to 2.1.

The organopolysiloxane used in the present invention may be such that its molecular chain is endblocked with a trimethylsilyl group, a dimethylphenylsilyl group, a dimethylhydroxysilyl group, a dimethylvinylsilyl group or a trivinylsilyl group at its end(s).

Particularly preferred organopolysiloxanes for use in the present invention include methylvinylpolysiloxane, methylphenylvinylpolysiloxane and methyltrifluoropropylvinylpolysiloxane.

The organopolysiloxanes may be prepared by, for example, (co)hydrolysis condensation of one or more organohalogenosilanes, or by ring-opening polymerization of a cyclic polysiloxane (siloxane trimer or tetramer) using an alkaline or acidic catalyst. They are basically linear diorganopolysiloxanes, but may be a mixture of two or more kinds of different molecular structures.

The organopolysiloxane preferably has a viscosity at 25°C of 100 centistokes (cSt) or above, and particularly preferably from 100,000 to 100,000,000 cSt.

The polymerization degree of the organopolysiloxane is preferably 100 or more, and particularly preferably from 3,000 to 20,000.

### (SiH group-containing compound [C])

The SiH group-containing compound [C] used in the present invention works as a crosslinking agent by reacting with the ethylene/α-olefin/non-conjugated polyene copolymer [A] and/or the organopolysiloxane [B]. There is no specific limitation on the molecular structure of the SiH group-containing compound [C], and any resinous compounds with linear, cyclic, branched or tridimensional network structures may be employed. However, it is necessary that the compound contains at least two silicon-bonded hydrogen atoms, in other words, at least two SiH groups in the molecule.

Exemplary SiH group-containing compounds [C] employable in the present invention include those compounds having the average composition formula of R⁴_{b}H_{c}SiO_{(4-b-c)/2}.

In the above formula, R⁴ is a substituted or unsubstituted monovalent hydrocarbon group other than an aliphatic unsaturated bond and has 1 to 10 carbon atoms, and particularly 1 to 8 carbon atoms. Such monovalent hydrocarbon groups include the alkyl groups listed for R¹ in the formula [I] and the phenyl group and halogen-substituted alkyl groups such as trifluoropropyl group. In particular, methyl, ethyl, propyl, phenyl and trifluoropropyl groups are preferable, and especially methyl and phenyl groups are preferred.

In the above formula, b is 0≤b<3, preferably 0.6<b<2.2, and particularly preferably 1.5≤b≤2; c is 0<c≤3, preferably 0.002≤c<2, and particularly preferably 0.01≤c≤1 ; and b+c is 0<b+c≤3, and preferably 1.5<b+c≤2.7.

The SiH group-containing compound [C] is preferably an organohydrogenpolysiloxane that has 2 to 1000 silicon atoms, particularly preferably 2 to 300 silicon atoms, and optimally 4 to 200 silicon atoms in the molecule.

Specific examples thereof include siloxane oligomers such as 1,1,3,3-tetramethyldisiloxane, 1,3,5,7-tetramethyltetracyclosiloxane and 1,3,5,7,8-pentamethylpentacyclosiloxane; and methylhydrogenpolysiloxane terminated with trimethylsiloxy groups at the both ends of molecular chain, dimethylsiloxane/methylhydrogensiloxane copolymer terminated with trimethylsiloxy groups at the both ends of molecular chain, methylhydrogenpolysiloxane terminated with silanol groups at the both ends of molecular chain, dimethylsiloxane/methylhydrogensiloxane copolymer terminated with silanol groups at the both ends of molecular chain, dimethylpolysiloxane terminated with dimethylhydrogensiloxy groups at the both ends of molecular chain, methylhydrogenpolysiloxane terminated with dimethylhydrogensiloxy groups at the both ends of molecular chain, dimethylsiloxane/methylhydrogensiloxane copolymer terminated with dimethylhydrogensiloxy groups at the both ends of molecular chain, and silicone resins which comprise R⁴₂(H)SiO_{1/2} units and SiO_{4/2} units and may optionally contain R⁴₃SiO_{1/2} units, R⁴₂SiO_{2/2} units, R⁴(H)SiO_{2/2} units, (H)SiO_{3/2} units or R⁴SiO_{3/2} units.

As the methylhydrogenpolysiloxane terminated with trimethylsiloxy groups at the both ends of molecular chain, there can be mentioned compounds represented by the following formula in which methyl groups are partially or totally substituted with ethyl, propyl, phenyl, or trifluoropropyl groups:

(CH₃)₃SiO-(-SiH(CH₃)-O-)_{d}Si(CH₃)₃

wherein d is an integer of 2 or more.

As the dimethylsiloxane/methylhydrogensiloxane copolymer terminated with trimethylsiloxy groups at the both ends of molecular chain, there can be mentioned compounds represented by the following formula, specifically compounds of the same formula in which methyl groups are partially or totally substituted with ethyl, propyl, phenyl, or trifluoropropyl groups:

(CH₃)₃SiO-(-Si(CH₃)₂-O-)ₑ-(-SiH(CH₃)-O-)_{f}-Si(CH₃)₃

wherein e is an integer of 1 or more, and f is an integer of 2 or more.

As the methylhydrogenpolysiloxane terminated with silanol groups at the both ends of molecular chain, there can be mentioned compounds represented by the following formula, and compounds of the same formula in which methyl groups are partially or totally substituted with ethyl, propyl, phenyl, or trifluoropropyl groups:

HOSi(CH₃)₂O-(-SiH(CH₃)-O-)₂-Si(CH₃)₂OH.

As the dimethylsiloxane/methylhydrogensiloxane copolymer terminated with silanol groups at the both ends of molecular chain, there can be mentioned compounds represented by the following formula, and compounds of the same formula in which methyl groups are partially or totally substituted with ethyl, propyl, phenyl, or trifluoropropyl groups:

HOSi(CH₃)₂O-(-Si(CH₃)₂-O-)ₑ-(-SiH(CH₃)-O-)_{f}-Si(CH₃)₂OH

wherein e is an integer of 1 or more, and f is an integer of 2 or more.

As the dimethylpolysiloxane terminated with dimethylhydrogensiloxy groups at the both ends of molecular chain, there can be mentioned compounds represented by the following formula, and compounds of the same formula in which methyl groups are partially or totally substituted with ethyl, propyl, phenyl, or trifluoropropyl groups:

HSi(CH₃)₂O-(-Si(CH₃)₂-O-)ₑ-Si(CH₃)₂H

wherein e is an integer of 1 or more.

As the methylhydrogenpolysiloxane terminated with dimethylhydrogensiloxy groups at the both ends of molecular chain, there can be mentioned compounds represented by the following formula, and compounds of the same formula in which methyl groups are partially or totally substituted with ethyl, propyl, phenyl, or trifluoropropyl groups:

HSi(CH₃)₂O-(-SiH(CH₃)-O-)ₑ-Si(CH₃)₂H

wherein e is an integer of 1 or more.

As the dimethylsiloxane/methylhydrogensiloxane copolymer terminated with dimethylhydrogensiloxy groups at the both ends of molecular chain, there can be mentioned compounds represented by the following formula, and compounds of the same formula in which methyl groups are partially or totally substituted with ethyl, propyl, phenyl, or trifluoropropyl groups:

HSi(CH₃)₂O-(-Si(CH₃)₂-O-)ₑ-(-SiH(CH₃)-O-)ₕ-Si(CH₃)₂H

wherein e and h are each an integer of 1 or more.

These compounds described above may be prepared by the conventional and known methods. For example, octamethylcyclotetrasiloxane and/or tetramethylcyclotetrasiloxane, and a compound that contains a triorganosilyl or diorganohydrogensiloxy group that will form a terminal group such as hexamethyldisiloxane or 1,3-dihydro-1,1,3,3-tetramethyldisiloxane, are equilibrated in the presence of a catalyst such as sulfuric acid, trifluoromethanesulfonic acid or methanesulfonic acid at temperatures of about -10 to +40°C.

The SiH group-containing compound [C] is used in an amount of 0. 1 to 100 parts by weight, preferably 0.1 to 75 parts by weight, more preferably 0.1 to 50 parts by weight, still preferably 0.2 to 30 parts by weight, even more preferably 0.2 to 20 parts by weight, particularly preferably 0.5 to 10 parts by weight, and optimally 0.5 to 5 parts by weight based on 100 parts by weight of the combined ethylene/α-olefin/non-conjugated polyene copolymer [A] and organopolysiloxane [B] ([A]+[B]). When the SiH group-containing compound [C] is used in the above amounts, the resultant rubber composition can give a crosslinked rubber molded product that has high compression set resistance, adequate crosslinking density, and excellent strength and elongation characteristics. The use of the SiH group-containing compound [C] in an amount exceeding 100 parts by weight is disadvantageous in terms of cost and is thus unfavorable.

The SiH group-containing compound [C] is suitably employed in an amount that gives 0.2 to 10, and preferably 0.7 to 5 silicon-bonded hydrogen atoms (≡SiH groups) per aliphatic unsaturated bond (such as an alkynyl or diene group) in the ethylene/α-olefin/non-conjugated polyene copolymer [A] (component [A]) and the organopolysiloxane [B] (component [B]). The SiH-group proportion less than 0.2 will result in insufficient crosslinking and, therefore, can cause inadequate mechanical strength. Contrary, the proportion exceeding 10 will lead to lowering of physical characteristics of a cured product, and can particularly lead to remarkable deteriorations in heat resistance and compression set resistance.

### (Catalyst [D])

The catalyst [D] optionally used in the present invention is an addition reaction catalyst and accelerates addition reaction (hydrosilylation of alkenes) of the SiH groups in the SiH group-containing compound [C] with the alkenyl groups in the ethylene/α-olefin/non-conjugated polyene copolymer component [A] and/or in the organopolysiloxane component [B].

The addition reaction catalysts generally consist of platinum group elements such as platinum catalysts, palladium catalysts and rhodium catalysts. The catalyst [D] used in the present invention is preferably a platinum catalyst. Of the addition reaction catalysts including the platinum catalysts, it is desirable to use as the catalyst [D] a complex of a metal element of Group 8 of the periodic table, particularly platinum, with a compound containing a vinyl group and/or a carbonyl group.

The compound containing a carbonyl group is preferably carbonyl or octanal. Exemplary complexes thereof with platinum include platinum-carbonyl complexes, platinum-octanal complexes, platinum-carbonylbutylcyclosiloxane complexes and platinum-carbonylphenylcyclosiloxane complexes.

The compound containing a vinyl group is preferably a vinyl group-containing organosiloxane. Exemplary complexes thereof with platinum include platinum-divinyltetramethyldisiloxane complexes, platinum-divinyltetraethyldisiloxane complexes, platinum-divinyltetrapropyldisiloxane complexes, platinum-divinyltetrabutyldisiloxane complexes and platinum-divinyltetraphenyldisiloxane complexes.

Of the vinyl group-containing organosiloxanes, vinyl group-containing cyclic organosiloxanes are preferred. Exemplary complexes thereof with platinum include platinum-vinylmethylcyclosiloxane complexes, platinum-vinylethylcyclosiloxane complexes and platinum-vinylpropylcyclosiloxane complexes.

The vinyl group-containing organosiloxane may be coordinated to the metal or may be used as a solvent in coordinating other ligand. In a particularly preferred embodiment of the catalyst [D], the vinyl group-containing organosiloxane is used as a solvent and the complex contains the carbonyl group-containing compound as a ligand.

Specific examples of such complexes include vinylmethylcyclosiloxane solutions of platinum-carbonyl complexes, vinylethylcyclosiloxane solutions of platinum-carbonyl complexes, vinylpropylcyclosiloxane solutions of platinum-carbonyl complexes, divinyltetramethyldisiloxane solutions of platinum-carbonyl complexes, divinyltetraethyldisiloxane solutions of platinum-carbonyl complexes, divinyltetrapropyldisiloxane solutions of platinum-carbonyl complexes, divinyltetrabutyldisiloxane solutions of platinum-carbonyl complexes and divinyltetraphenyldisiloxane solutions of platinum-carbonyl complexes.

These complex catalysts may further contain a component other than the vinyl and/or carbonyl group-containing compound(s). For example, they may contain a solvent other than the vinyl and/or carbonyl group-containing compound(s). Such solvents include, but not limited to, alcohols and xylenes.

Specific examples of the alcohols include:
aliphatic saturated alcohols such as methyl alcohol, ethyl alcohol, propyl alcohol, isopropyl alcohol, butyl alcohol, sec-butyl alcohol, tert-butyl alcohol, n-amyl alcohol, isoamyl alcohol, hexyl alcohol, heptyl alcohol, octyl alcohol, capryl alcohol, nonyl alcohol, decyl alcohol, undecyl alcohol, lauryl alcohol, tridecyl alcohol, myristyl alcohol, cetyl alcohol, stearyl alcohol and eicosyl alcohol;
unsaturated aliphatic alcohols such as allyl alcohol and crotyl alcohol;
alicyclic alcohols such as cyclopentanol and cyclohexanol ;
aromatic alcohols such as benzyl alcohol and cinnamyl alcohol; and
heterocyclic alcohols such as furfuryl alcohol.

The complexes prepared using the alcohols as a solvent include platinum-octanal/octanol complexes. These solvents enable the catalyst to be handled easily and be easily incorporated in the rubber composition.

Of the catalysts mentioned hereinabove, the vinylmethylcyclosiloxane solutions of platinum-carbonyl complexes (particularly those of the following chemical formula 1), platinum-vinylmethylcyclosiloxane complexes (particularly those of the following chemical formula 2), platinum-divinyltetramethyldisiloxane complexes (particularly those of the following chemical formula 3) and platinum-octanol/octanol complexes are preferable. Particularly, the vinylmethylcyclosiloxane solutions of platinum-carbonyl complexes are preferred.
Chemical formula 1: Pt⁰·CO·(CH₂=CH(Me)SiO)₄
Chemical formula 2: Pt⁰·(CH₂=CH(Me)SiO)₄
Chemical formula 3: Pt⁰-1.5[(CH₂=CH(Me)₂Si)₂O]

These catalysts preferably contain the Group 8 elemental metal of the periodic table (preferably platinum) in amounts of 0.1 to 10 wt%, preferably 1 to 5 wt%, more preferably 2 to 4 wt%, and particularly preferably 2.5 to 3.5 wt%.

The catalyst [D] is used in an amount of 0.1 to 100,000 wt ppm, preferably 0.1 to 10,000 wt ppm, more preferably 1 to 5,000 wt ppm, and particularly preferably 5 to 1,000 wt ppm based on the total of the ethylene/α-olefin/non-conjugated polyene copolymer [A] and the organopolysiloxane [B] ([A]+[B]).

When the catalyst [D] is used in the above amounts, the resultant rubber composition can give a crosslinked rubber molded product that has an adequate crosslinking density and excellent strength and elongation characteristics. The use of the catalyst [D] in an amount exceeding 100,000 wt ppm is disadvantageous in terms of cost and is thus unfavorable.

In the present invention, it is possible to obtain a crosslinked rubber molded product by irradiating an uncrosslinked rubber molded product from the rubber composition not containing the catalyst [D] with light, γ-rays, electron beams or the like.

### (Reaction inhibitor [E])

In the present invention, a reaction inhibitor [E] is optionally employed like the catalyst [D]. Examples thereof include benzotriazoles, ethynyl group-containing alcohols (such as ethynylcyclohexanol), acrylonitriles, amide compounds (such as N,N-diallylacetamide, N,N-diallylbenzamide, N,N,N',N'-tetraallyl-o-phthalic acid diamide, N,N,N',N'-tetraallyl-m-phthalic acid diamide and N,N,N',N'-tetraallyl-p-phthalic acid diamide), sulfur, phosphorous, nitrogen, amine compounds, sulfur compounds, phosphorous compounds, tin, tin compounds, tetramethyltetravinylcyclotetrasiloxane and organic peroxides such as hydroperoxide.

The reaction inhibitor [E] is used in an amount of 0 to 50 parts by weight, generally 0.0001 to 50 parts by weight, preferably 0.0001 to 30 parts by weight, more preferably 0.0001 to 20 parts by weight, even more preferably 0.0001 to 10 parts by weight, and particularly preferably 0.0001 to 5 parts by weight based on 100 parts by weight of the combined ethylene/α-olefin/non-conjugated polyene copolymer [A] and organopolysiloxane [B] ([A]+[B]).

When the reaction inhibitor [E] is used in an amount of 50 parts by weight or less, the resultant rubber composition has a high crosslinking rate and good productivity for crosslinked rubber molded products. The use of the reaction inhibitor [E] in an amount exceeding 50 parts by weight is disadvantageous in terms of cost and is thus unfavorable.

### (Other components)

The rubber composition as used for preparing HDD top cover gaskets according to the present invention exhibits its characteristics most satisfactorily when used as a crosslinked product such as a crosslinked rubber molded product or a crosslinked rubber foam.

The rubber composition as used for preparing HDD top cover gaskets may contain conventional additives depending on the intended use of the crosslinked product without adversely affecting the objects of the present invention. Such additives include rubber reinforcing agents, inorganic fillers, softeners, anti-aging agents, processing aids, vulcanization accelerators, organic peroxides, crosslinking aids, foaming agents, foaming aids, colorants, dispersants and flame retardants.

The rubber reinforcing agents provide higher mechanical characteristics including tensile strength, tear strength and abrasion resistance of crosslinked (vulcanized) rubbers. Examples thereof include carbon blacks such as SRF, GPF, FEF, HAF, ISAF, SAF, FT and MT, these carbon blacks which are surface-treated with a silane coupling agent or the like, silicic acid powder and silicas.

Specific examples of the silicas include fumed silicas and precipitated silicas. These silicas may be surface-treated with reactive silanes such as hexamethyldisilazane, chlorosilane and alkoxysilane, or low molecular weight siloxanes. These silicas preferably have specific surface areas as measured by BET method of 10 m²/g or more, and more preferably from 30 to 500 m²/g.

Types and amounts of the rubber reinforcing agents may be appropriately determined depending on the use of the crosslinked product. However, the rubber reinforcing agent is generally added in an amount of up to 300 parts by weight, and preferably up to 200 parts by weight based on 100 parts by weight of the combined ethylene/α-olefin/non-conjugated polyene copolymer [A] and organopolysiloxane [B] ([A]+[B]).

The inorganic fillers include precipitated calcium carbonate, heavy calcium carbonate, talcs and clays.

Types and amounts of the inorganic fillers may be appropriately determined depending on the use of the crosslinked product. However, the inorganic filler is generally added in an amount of up to 300 parts by weight, and preferably up to 200 parts by weight based on 100 parts by weight of the combined ethylene/α-olefin/non-conjugated polyene copolymer [A] and organopolysiloxane [B] ([A]+[B]).

The softeners include conventional softeners commonly used for rubbers.

Specific examples thereof include:
petroleum type softeners such as process oils, lubricating oils, paraffins, liquid paraffins, petroleum asphalts and vaselines;
coal tar type softeners such as coal tars and coal tar pitches;
fatty oil type softeners such as castor oils, linseed oils, rapeseed oils and coconut oils;
tall oils;
factices;
waxes such as beeswaxes, carnauba waxes and lanolins;
fatty acids and fatty acid salts, such as ricinoleic acid, palmitic acid, barium stearate, calcium stearate and zinc laurate; and
synthetic polymers such as petroleum resins, atactic polypropylenes and coumarone-indene resins. Of these, the petroleum type softeners are preferably used, and process oils are particularly preferably employed.

Amounts of the softeners are appropriately determined depending on the use of the crosslinked product.

The anti-aging agents include amine-based, hindered phenol-based, and sulfur-based anti-aging agents. As described hereinabove, they are used within limits not detrimental to the objects of the present invention.

The amine-based anti-aging agents employable in the present invention include diphenylamines and phenylenediamines.

Specific examples of the diphenylamines include p-(p-toluene sulfonylamide)-diphenylamine, 4,4'-(α,α-dimethylbenzyl)diphenylamine, 4,4'-dioctyl diphenylamine, a high-temperature reaction product of diphenylamine and acetone, a low-temperature reaction product of diphenylamine and acetone, a low-temperature reaction product of diphenylamine, aniline and acetone, a reaction product of diphenylamine and diisobutylene, octylated diphenylamine, dioctylated diphenylamine, p,p'-dioctyl diphenylamine and alkylated diphenylamine.

Specific examples of the phenylenediamines include p-phenylenediamines such as N,N'-diphenyl-p-phenylenediamine, n-isopropyl-N'-phenyl-p-phenylenediamine, N,N'-di-2-naphthyl-p-phenylenediamine, N-cyclohexyl-N'-phenyl-p-phenylenediamine, N-phenyl-N'-(3-methacryloyloxy-2-hydroxypropyl)-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-(1,3-dimethylbutyl)-N'-phenyl-p-phenylenediamine, phenylhexyl-p-phenylenediamine and phenyloctyl-p-phenylenediamine.

Of these, 4,4'-(α,α-dimethylbenzyl)diphenylamine and N,N'-di-2-naphthyl-p-phenylenediamine are particularly preferred.

The above compounds may be used singly or in combination of two or more kinds.

Specific examples of the hindered phenol-based anti-aging agents include:
(1) 1,1,3-tris-(2-methyl-4-hydroxy-5-t-butylphenyl)butane,
(2) 4,4'-butylidenebis-(3-methyl-6-t-butylphenol),
(3) 2,2-thiobis(4-methyl-6-t-butylphenol),
(4) 7-octadecyl-3-(4'-hydroxy-3',5'-di-t-butylphenyl) propionate,
(5) tetrakis-[methylene-3-(3',5'-di-t-butyl-4'-hydroxyphenyl)propionate]methane,
(6) pentaerythritol-tetrakis[3-(3,5-di-t-butyl-4-hydroxyphenyl)propionate],
(7) triethyleneglycol-bis[3-(3-t-butyl-5-methyl-4-hydroxyphenyl)propionate],
(8) 1,6-hexanediol-bis[3-(3,5-di-t-butyl-4-hydroxyphenyl) propionate],
(9) 2,4-bis(n-octylthio)-6-(4-hydroxy-3,5-di-t-butylanilino)-1,3,5-triadine,
(10) tris-(3,5-di-t-butyl-4-hydroxybenzyl)-isocyanurate,
(11) 2,2-thio-diethylenebis[3-(3,5-di-t-butyl-4-hydroxyphenyl)propionate],
(12) N,N'-hexamethylenebis(3,5-di-t-butyl-4-hydroxy)-hydrocinnamide,
(13) 2,4-bis[(octylthio)methyl]-o-cresol,
(14) 3,5-di-t-butyl-4-hydroxybenzyl-phosphonato-diethyl ester,
(15) tetrakis[methylene(3,5-di-t-butyl-4-hydroxyhydrocinnamato)]methane,
(16) octadecyl-3-(3,5-di-t-butyl-4-hydroxyphenyl) propionate, and
(17) 3,9-bis[2-{3-(3-t-butyl-4-hydroxy-5-methylphenyl) propionyloxy}-1,1-dimethylethyl]-2,4,8,10-tetraoxaspiro[5,5]undecane.

Of these, the phenol compounds (5) and (17) are particularly preferable.

The sulfur-based anti-aging agents include conventional sulfur-based anti-aging agents commonly used for rubbers.

Specific examples thereof include:
imidazole anti-aging agents such as 2-mercaptobenzoimidazole, zinc salt of 2-mercaptobenzoimidazole, 2-mercaptomethylbenzoimidazole, zinc salt of 2-mercaptomethylbenzoimidazole and zinc salt of 2-mercaptomethylimidazole; and
aliphatic thioether anti-aging agents such as dimyristyl thiodipropionate, dilauryl thiodipropionate, distearyl thiodipropionate, ditridecyl thiodipropionate and pentaerythritol-tetrakis-(β-lauryl-thiopropionate). Of these, particularly preferable are 2-mercaptobenzoimidazole, zinc salt of 2-mercaptobenzoimidazole, 2-mercaptomethylbenzoimidazole, zinc salt of 2-mercaptomethylbenzoimidazole and pentaerythritol-tetrakis-(β-lauryl-thiopropionate).

The processing aids include conventional compounds commonly used in the processing of rubbers. Specific examples thereof include higher fatty acids such as ricinoleic acid, stearic acid, palmitic acid and lauric acid; salts of higher fatty acids, such as barium stearate, zinc stearate and calcium stearate; and esters of higher fatty acids such as those of ricinoleic acid, stearic acid, palmitic acid and lauric acid.

The processing aid is generally added in an amount of 10 parts by weight or less, and preferably 5 parts by weight or less based on 100 parts by weight of the combined ethylene/α-olefin/non-conjugated polyene copolymer [A] and organopolysiloxane [B] ([A]+[B]). However, it is desirable to determine an optimum amount thereof depending on the physical properties required.

In the present invention, an organic peroxide may be employed in addition to the catalyst [D] to perform both addition crosslinking and radical crosslinking. The organic peroxide may be added in an approximate amount of 0.1 to 10 parts by weight based on 100 parts by weight of the combined ethylene/α-olefin/non-conjugated polyene copolymer [A] and organopolysiloxane [B] ([A]+[B]). The organic peroxide may be a known organic peroxide commonly used in crosslinking rubbers.

The organic peroxide is preferably used in combination with a crosslinking aid.

Specific examples of the crosslinking aids include sulfur; quinone dioxime compounds such as p-quinone dioxime; methacrylate compounds such as polyethyleneglycol dimethacrylate; allyl compounds such as diallyl phthalate and triallyl cyanurate; maleimide compounds; and divinylbenzenes. The crosslinking aid is used in an amount of 0.5 to 2 mol per mol of the organic peroxide used, and preferably in an approximately equimolar amount.

The crosslinkable rubber composition for HDD top cover gaskets may be blended with a known rubber without adversely affecting the objects of the present invention.

Such rubbers include natural rubbers (NR), isoprene-based rubbers such as isoprene rubber (IR), and conjugated diene-based rubbers such as butadiene rubber (BR), styrene/butadiene rubber (SBR), acrylonitrile/butadiene rubber (NBR) and chloroprene rubber (CR).

Furthermore, conventional ethylene/α-olefin copolymer rubbers may also be employed, including ethylene/propylene random copolymers (EPR) and ethylene/α-olefin/polyene copolymers (such as EPDM) other than the ethylene/α-olefin/non-conjugated polyene copolymer [A].

When the rubber composition is to be produced into HDD top cover gaskets, a crosslinked rubber sheet from the composition preferably has a compression set of 50% or less (the method for the sheet production will be described later). Such compression set can ensure sufficient sealing properties in HDD. Also, the crosslinked rubber sheet desirably has a tensile strength of 2 MPa or more. This tensile strength makes material breakage during production more difficult. Furthermore, the crosslinked rubber sheet preferably has a hardness (JIS K6253) of less than 70. When the hardness is 70 or more, an extreme reaction force will be caused when a cover-gasket assembly is attached to a main body. Consequently, the cover may be deformed and fail to achieve complete sealing. That is, the sealing properties of the gasket may be inadequate. Meanwhile, the hardness is preferably not less than 10. When the hardness is less than 10, the gasket will be prone to breakage and stick together easily, requiring careful handling. Most preferably, the hardness is in the range of 20 to 40.

Further, the rubber composition as used for preparing top cover gaskets for hard disk drives may contain an appropriate compounding ingredient according to need. The compounding ingredients include:
reinforcing agents such as carbon blacks and white carbons;
fillers such as diatomaceous earths, talcs, clays, graphites, calcium silicate, barium sulfate, calcium carbonate, magnesium carbonate, aluminum hydroxide and micas;
powdery solid filler such as various metal powders, glass powders, ceramic powders and granular or powdery polymers;
small amounts of thermoplastic resins or rubbers for improving wear properties and moldability;
short fibers for enhancing strength and rigidity;
processing aids such as stearic acid, palmitic acid and paraffin waxes;
acid racceptors such as zinc oxide and magnesium oxide;
anti-aging agents such as those based on amine, phenol and imidazole; and

In view of the application as HDD top cover gaskets, the composition preferably gives a cured product having a surface hardness (durometer A hardness) of 45 or less. A durometer A hardness of the hardened product as low as 45 or less can be achieved by adjusting the amounts of the additives, such as the reinforcing agents, fillers or plasticizers, added to the composition. The hardened product can display a desired low hardness even without addition of these additives. The reinforcing agents or fillers that contain sulfur or halogen compounds which can be catalyst poisons should be preferably avoided.

### [Preparation of rubber composition and HDD top cover gaskets, etc.]

As described hereinabove, the rubber composition as used for preparing HDD top cover gaskets according to the present invention exhibits its characteristics most satisfactorily in the form of a crosslinked rubber molded product.

The rubber composition as used for preparing HDD top cover gaskets can be produced into a crosslinked rubber molded product by the conventional method of rubber vulcanization (crosslinking). For example, an uncrosslinked compounded rubber is first prepared, and thereafter the compounded rubber is molded into a desired shape and then crosslinked.

The crosslinking may be accomplished by heating the composition to induce reaction of the crosslinking agent (SiH group-containing compound [C]). Also, light, γ-ray or electron beam irradiation can effect the crosslinking.

An exemplary production method for the rubber composition for HDD top cover gaskets will be described below.

The rubber composition as used for preparing HDD top cover gaskets can be produced by a series of steps in which:
the ethylene/α-olefin/non-conjugated polyene copolymer [A], the organopolysiloxane [B] and an additive such as the aforesaid rubber reinforcing agent, inorganic filler or softener, are kneaded together in an internal mixer (enclosed mixer) such as a Banbury mixer, a kneader or an intermixer, preferably at temperatures between 50 and 180°C for 3 to 10 minutes;
the resultant mixture is further mixed with the SiH group-containing compound [C] and optionally the catalyst [D], reaction inhibitor [E], vulcanization accelerator and crosslinking aid, in a roll mill such as an open roll mill or a kneader at a roll temperature of 100°C or below for 1 to 30 minutes; and
the resultant mixture is sheeted.

When the kneading temperature in the internal mixer is low, the anti-aging agent, colorant, dispersant, flame retardant or the like may be kneaded together with the ethylene/α-olefin/non-conjugated polyene copolymer [A], organopolysiloxane [B], SiH group-containing compound [C], rubber reinforcing agent, inorganic filler, softener, etc.

The rubber composition as used for preparing HDD top cover gaskets prepared as described above is then molded by various methods into desired shapes and crosslinked. The crosslinking may be carried out simultaneously with the molding or by introducing the molded product into a vulcanization tank. Employable molding machines include LIM machines, injection molding machines, transfer molding machines, press molding machines, extrusion molding machines and calendaring rolls. Of these, LIM machines are preferable for production of the objective HDD top cover gaskets from the viewpoints of thickness accuracy and high-speed molding. Injection molding and compression molding are also suitable. Crosslinking conditions are such that the molded product is heated at temperatures from 50 to 270°C for 0.5 to 30 minutes, or is irradiated with light, γ-rays or electron beams by the aforesaid procedure. Thus, a crosslinked rubber molded product, i.e., the HDD top cover gasket of the present invention is obtained. It is also possible to perform the crosslinking at room temperature.

The crosslinking may be carried out with or without a mold. When the crosslinking is performed without a mold, the molding and crosslinking steps are generally carried out consecutively. In the case of heating in a vulcanization tank, a heating tank may be used which utilizes hot air, fluidized bed of glass beads, UHF (ultra high frequency electromagnetic wave) or steam.

When the rubber composition as used for preparing HDD top cover gaskets is subjected to LIM, it is desirable to prepare liquid rubber compositions in which the SiH group-containing compound [C] and the catalyst [D] are separately contained.

Specifically, the ethylene/α-olefin/non-conjugated polyene copolymer [A], the organopolysiloxane [B], the additives such as the rubber reinforcing agent, inorganic filler and softener, and the SiH group-containing compound [C] are kneaded together in a stirrer for 3 to 10 minutes to give a liquid rubber composition (1). The stirrer will be appropriately selected depending on the viscosity of the materials, from internal mixers (enclosed mixers) such as a Banbury mixer, a kneader and an intermixer, and a planetary mixer. Separately, the ethylene/α-olefin/non-conjugated polyene copolymer [A], the organopolysiloxane [B], the additives such as the rubber reinforcing agent, inorganic filler and softener, the catalyst [D] and optionally the reaction inhibitor [E] are kneaded together for 3 to 10 minutes to give a liquid rubber composition (2). Thereafter, the liquid rubber compositions (1) and (2) are introduced into respective pail cans or cartridges directly connectable to an LIM machine. The liquid rubber compositions are then injected via metering devices and a mixing apparatus, thereby performing LIM. The objective HDD top cover gasket can be thus obtained.

When the gasket and a HDD top cover are integrated, an adhesive may be employed. The adhesives include epoxy rein adhesives, phenolic resin adhesives, and isocyanate or silane coupling agents. The adhesive can be applied by an optimum technique according to need, and exemplary techniques include dip coating, spray coating, screen printing, brush coating and stamping coating.

### EXAMPLES

Hereinbelow, the present invention will be described in greater detail by the following Examples. However, it should be construed that the invention is in no way limited to the Examples.

The compositions, iodine values and intrinsic viscosities [η] of the copolymers [A] used in Examples and Comparative Examples were measured or determined by the following methods.

### (1) Compositions of the copolymers [A]

Compositions of the copolymers [A] were determined by ¹³C-NMR.

### (2) Iodine values of the copolymers [A]

Iodine values of the copolymers [A] were determined by titration.

### (3) Intrinsic viscosities [η]

Intrinsic viscosities [η] of the copolymers [A] were measured in decalin at 135°C.

### (Preparation Example 1)

### [Production of ethylene/propylene/5-vinyl-2-norbornene random copolymer rubber (A-1)]

Terpolymerization of ethylene, propylene and 5-vinyl-2-norbornene was carried out in a 100-liter stainless steel polymerization reactor equipped with an agitating blade (revolutions per minute: 250 rpm). The terpolymerization was conducted by continuously feeding, from outside the polymerization reactor to the liquid phase, hexane at 60 liter/h, ethylene at 3.0 kg/h, propylene at 9.0 kg/h, 5-vinyl-2-norbornene at 550 g/h, hydrogen at 70 liter/h, and catalysts: VOCl₃ at 95 mmol/h, Al(Et)₂Cl at 443 mmol/h and Al(Et)_{1.5}Cl_{1.5} at 127 mmol/h.

The reaction gave an ethylene/propylene/5-vinyl-2-norbornene random copolymer rubber (A-1) as a homogeneous solution.

Thereafter, the polymerization solution was continuously drawn off from the bottom of the polymerization reactor, and polymerization reaction was terminated by addition of a small amount of methanol. Subsequently, the polymer was separated from the solvent by steam stripping and then vacuum dried at 55°C over a period of 48 hours.

The thus-obtained ethylene/propylene/5-vinyl-2-norbornene random copolymer rubber (A-1) had properties shown in Table 1.

In Table 1, the ethylene content and diene content are in terms of % by mass.

### (Preparation Examples 2 and 3)

Terpolymerization was conducted by the procedure of Preparation Example 1, except that the polymerization conditions were altered as specified in Table 1. Thus, ethylene/propylene/5-vinyl-2-norbornene random copolymer rubbers (A-2) and (A-3) having different properties were obtained. Properties of the copolymer rubbers (A-2) and (A-3) are shown in Table 1.

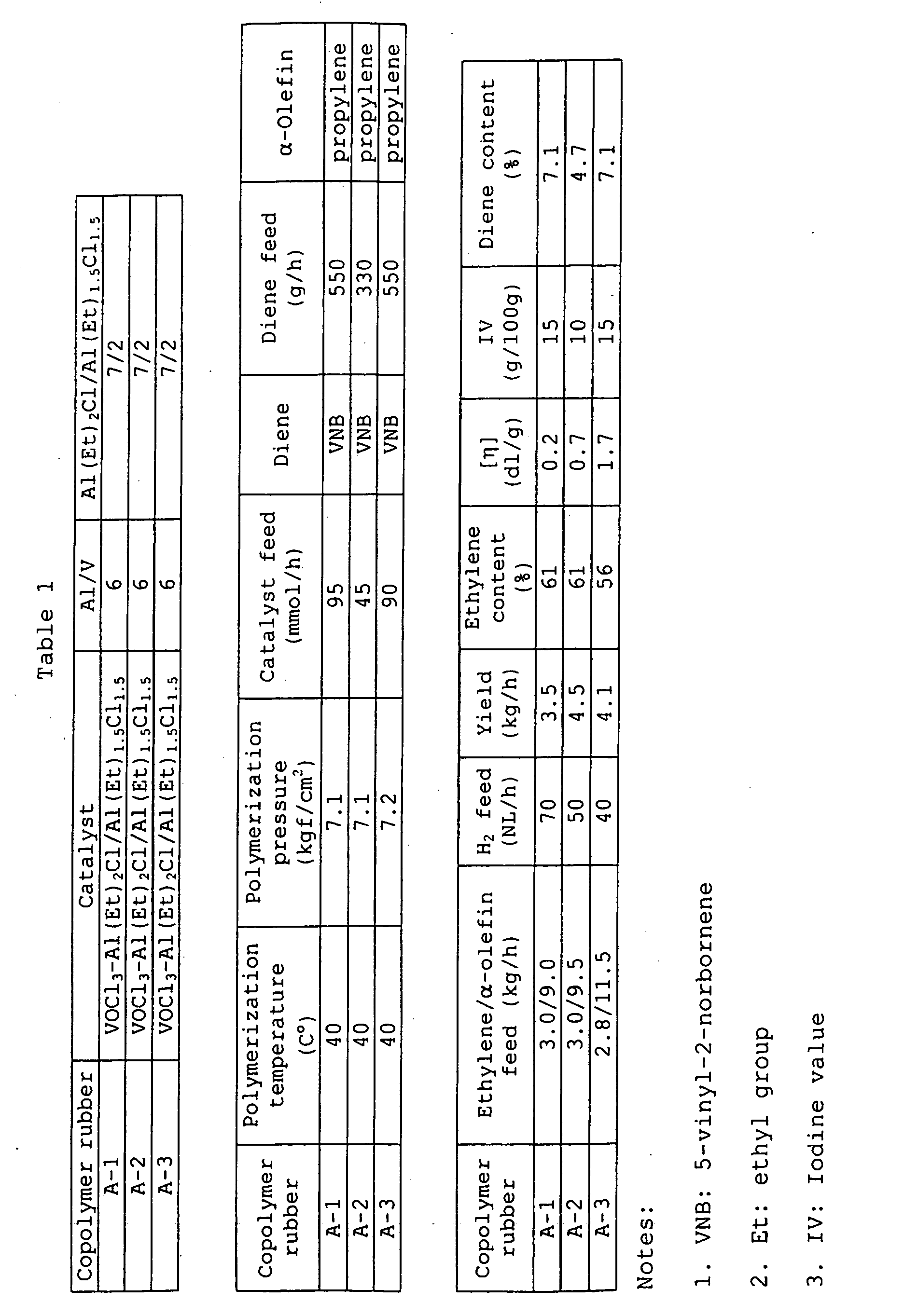

### (Example 1)

100 Parts by weight of the ethylene/propylene/5-vinyl-2-norbornene random copolymer rubber (A-1) indicated in Table 1 and 30 parts by weight of carbon black (trade name: SEAST G-116, available from TOKAI CARBON CO., LTD.) were kneaded together by a 2-liter planetary mixer (trade name: PLM-2, available from INOUE SEISAKUSHO K.K.) to give a blend (I-1).

To 130 parts by weight of the blend (I-1) were added 4 parts by weight of a compound represented by C₆H₅-Si(OSi(CH₃)₂H)₃ as the SiH group-containing compound [C] (crosslinking agent), 0.1 part by weight of ethynylcyclohexanol as the reaction inhibitor [E], and 0.1 part by weight of an isopropyl alcohol solution of 2 wt% chloroplatinic acid as the catalyst [D]. They were kneaded three times by three rolls of 3-inch diameter (trade name: three-roll mill, available from KODAIRA SEISAKUSHO, CO., LTD.), and then pressed by a 50-ton press molding machine at 120°C for 6 minutes. Thus, a crosslinked rubber sheet having a thickness of 2 mm was produced.

The sheet obtained as described above was subjected to a tensile test by the following procedure. The results are set forth in Table 2.

### (1) Tensile test

Tensile test was carried out in accordance with JIS K6251 at a measurement temperature of 23°C and at an elastic stress rate of 500 mm/min to determine the tensile strength T_{B} and elongation E_{B} at break of the crosslinked sheet.

### (2) Gas barrier properties

Gas barrier properties were tested under the following conditions in accordance with JIS K7126, and an oxygen permeability coefficient was measured.

### (Measurement conditions)

Oxygen 100%
Testing temperature 23°C
Humidity 0%

### (Testing machine)

Differential pressure gas permeation (gas transmission rate) tester produced by Toyo Seiki Seisaku-sho, Ltd.

### (3) Acid resistance

The sheet was immersed in an acidic solution under the conditions described below in accordance with JIS K6258. Thereafter, the tensile elongation, tensile strength and volume were measured, and rates of change thereof were determined.

### (Immersion conditions)

25°C, 168 hours

### (Acidic solutions)

Solution of 35 wt% hydrochloric acid
Solution of 70 wt% sulfuric acid

### (Example 2)

A crosslinked rubber sheet was produced by the procedure illustrated in Example 1, except that 30 parts by weight of the carbon black used in Example 1 were replaced by 30 parts by weight of silica (trade name: Nipsil VN3, available from NIPPON SILICA Industrial Co., Ltd.).

The crosslinked rubber sheet was tested to determine its tensile properties, gas barrier properties and acid resistance by the aforesaid methods.

The results are set forth in Table 2.

### (Example 3)

A crosslinked rubber sheet was produced by the procedure illustrated in Example 1, except that the ethylene/propylene/5-vinyl-2-norbornene random copolymer rubber (A-1) was replaced by the ethylene/propylene/5-vinyl-2-norbornene random copolymer rubber (A-2) indicated in Table 1.

The crosslinked rubber sheet was tested to determine its tensile properties, gas barrier properties and acid resistance by the aforesaid methods.

The results are set forth in Table 2.

### (Example 4)

A crosslinked rubber sheet was produced by the procedure illustrated in Example 1, except that the ethylene/propylene/5-vinyl-2-norbornene random copolymer rubber (A-1) was replaced by the ethylene/propylene/5-vinyl-2-norbornene random copolymer rubber (A-3) indicated in Table 1.

The crosslinked rubber sheet was tested to determine its tensile properties, gas barrier properties and acid resistance by the aforesaid methods.

The results are set forth in Table 2.

### (Comparative Example 1)

100 Parts by weight of the ethylene/propylene/5-vinyl-2-norbornene random copolymer rubber (A-1) indicated in Table 1 and 30 parts by weight of carbon black (trade name: SEAST G-116, available from TOKAI CARBON CO., LTD.) were kneaded together by a 2-liter planetary mixer (trade name: PLM-2, available from INOUE SEISAKUSHO K.K.) to give a blend.

To 130 parts by weight of the blend were added 1.5 parts by weight of sulfur, vulcanization accelerators: 0.5 part by weight of 2-mercaptobenzothiazol (trade name: Sanceler M, available from SANSHIN CHEMICAL INDUSTRY CO., LTD.) and 1.0 part by weight of tetramethylthiuram disulfide (trade name: Sanceler TT, available from SANSHIN CHEMICAL INDUSTRY CO., LTD.), 5 parts by weight of zinc oxide and 1 part by weight of stearic acid. They were kneaded three times by three rolls of 3-inch diameter (trade name: three-roll mill, available from KODAIRA SEISAKUSHO, CO., LTD.), and then pressed by a 50-ton press molding machine at 120°C for 6 minutes. Thus, a crosslinked rubber sheet having a thickness of 2 mm was produced. However, the sheet was so inferior that the properties measurements were impossible.

**Table 2**

| | Ex. 1 | Ex. 2 | Ex. 3 | Ex. 4 | Comp. Ex. 1 |
|---|---|---|---|---|---|
| Composition [parts by weight] | | | | | |
| Copolymer rubber (A-1) | 100 | 100 | | | 100 |
| Copolymer rubber (A-2) | | | 100 | | |
| Copolymer rubber (A-3) | | | | 100 | |
| C₆H₅Si(-OSi(CH₃)₂H)₃ [C] | 4 | 4 | 4 | 4 | |
| IPA solution of 2% chloroplatinic acid [D] | 0.1 | 0.1 | 0.1 | 0.1 | |
| Ethynylcyclohexanol [E] | 0.1 | 0.1 | 0.1 | 0.1 | |
| Carbon black | 30 | | 30 | 30 | 30 |
| Silica | | 30 | | | |
| Sulfur | | | | | 1.5 |
| Vulcanization accelerator (Sanceler^{™} M) | | | | | 0.5 |
| Vulcanization accelerator (Sanceler^{™} TT) | | | | | 1 |
| Zinc oxide | | | | | 5 |
| Stearic acid | | | | | 1 |

| Properties of crosslinked rubber sheet | | | | | |
|---|---|---|---|---|---|
| T_{B} [MPa] | 5.5 | 6.2 | 7.5 | 10 | |
| E_{B} [%] | 110 | 130 | 230 | 350 | Crosslinking failed |
| Oxygen permeation coefficient [cm³·cm/cm²·s·cmHg] | 2.7×10⁻⁹ | 2.9×10⁻⁹ | 2.6×10⁻⁹ | 2.3×10⁻⁹ | |

| Acid resistance | | | | | |
|---|---|---|---|---|---|
| (Solution of 35 wt% hydrochloric acid) | | | | | |
| T_{B} retention (%) | 102 | 103 | 100 | 110 | |
| E_{B} retention (%) | 100 | 100 | 99 | 100 | |
| Volume change (%) | 0 | 0.1 | 0 | 0 | |

| (Solution of 70 wt% sulfuric acid) | | | | | |
|---|---|---|---|---|---|
| T_{B} retention (%) | 100 | 101 | 102 | 100 | |
| E_{B} retention (%) | 93 | 93 | 94 | 95 | |
| Volume change (%) | 0.3 | 0.1 | 0.2 | 0 | |

| | | | | | |
|---|---|---|---|---|---|
| Note: IPA in Component [D]: isopropyl alcohol | | | | | |

### (Example 5)

100 Parts by weight of the ethylene/propylene/5-vinyl-2-norbornene random copolymer rubber (A-1) indicated in Table 1 and 30 parts by weight of carbon black (trade name: SEAST G-116, available from TOKAI CARBON CO., LTD.) were kneaded together by a 2-liter planetary mixer (trade name: PLM-2, available from INOUE SEISAKUSHO K.K.) to give a blend (I-2).

To 130 parts by weight of the blend (I-2) were added 4 parts by weight of a compound represented by C₆H₅-Si(OSi(CH₃)₂H)₃ as the SiH group-containing compound [C] (crosslinking agent), 0.1 part by weight of ethynylcyclohexanol as the reaction inhibitor [E] and 0.1 part by weight of an isopropyl alcohol solution of 2 wt% chloroplatinic acid as the catalyst [D]. They were kneaded three times by three rolls of 3-inch diameter (trade name: three-roll mill, available from KODAIRA SEISAKUSHO, CO., LTD.), and then pressed by a 50-ton press molding machine at 120°C for 6 minutes. Thus, a crosslinked rubber sheet having a thickness of 2 mm was produced.

The crosslinked rubber sheet obtained as described above was tested to determine its hardness, compression set resistance and tensile properties by the following procedures. The results are set forth in Table 3.

### (1) Hardness test

Hardness test was carried out in accordance with JIS K6253 with respect to a testing sample consisting of three 2 mm thick crosslinked rubber sheets superimposed one upon another.

### (2) Compression set resistance test

Compression set resistance was tested in accordance with JIS K6262. A testing sample of 2 mm thick crosslinked rubber sheet was heat treated at 120°C for 168 hours, and its compression set was measured. The compression set resistance of the sheet was evaluated based on the following criteria.
Acceptable (AA): Compression set was less than 50%
Unacceptable (CC): Compression set was 50% or more
Compression set of 50% or more causes a HDD top cover gasket to exhibit insufficient sealing properties and is thus unfavorable.

### (3) Tensile test

Tensile test was carried out in accordance with JIS K6251 to determine a tensile strength. Tensile strength characteristics were evaluated based on the following criteria.
Acceptable (AA): Tensile strength was 2 MPa or more
Unacceptable (CC): Tensile strength was less than 2 MPa
Tensile strength of less than 2 MPa causes a HDD top cover gasket to break easily during production and is thus unfavorable.

Further, samples were produced as described below for testing sealing properties, adhesion properties and molding properties by the methods specified below. Product evaluations were thus performed. The results are set forth in Table 3.

First, an adhesive (silane adhesive, trade name: AP-133, available from Lord Far East, Inc.) was applied onto a cover-shaped aluminum plate (on which a nickel coating had been formed in thickness of 2 to 5µm by electroless plating). The plate was then inserted into a mold, and a HDD top cover gasket was molded thereon by means of a liquid injection molding machine under the conditions of a cylinder temperature of 50 to 80°C, an injection rate of 0.5 second, an injection pressure of 100 MPa, a mold temperature of 200°C and a cycle time of 300 seconds. Thus, a cover-gasket assembly was manufactured.

The cover-gasket assembly was then tested to determine its sealing properties, adhesion properties and molding properties.

### (4) Test of sealing properties

The cover-gasket assembly was installed in a leak tester for actual use, and was heat treated at 80°C for 168 hours. Thereafter, the temperature was lowered to room temperature and a positive pressure of 5 kPa was continuously applied from inside of the tester over a period of 30 seconds. Leakage was checked after 15 seconds. In this test, sealing properties were evaluated based on the following criteria.
Acceptable (AA): No leakage was observed
Unacceptable (CC): Leakage was observed
Leakage is attributed to a poor compression set resistance of the gasket material or an inadequate gasket shape.

### (5) Test of adhesion properties

An approximately 1 mm passage was formed through the interface of the assembled cover and gasket, and a SUS wire was passed through the passage. Thereafter, a vertical tensile load was applied, and the load (peeling load) was measured when the passage was enlarged to about 10 mm wide. In this test, adhesion properties were evaluated based on the following criteria.
Acceptable (AA): Peeling load was 100 kPa or more
Unacceptable (CC): Peeling load was less than 100 kPa
Peeling load of 100 kPa or more ensures sufficient adhesion under practical use conditions.

### (6) Test of molding properties

Molding properties were evaluated as Acceptable (AA) when no trouble was caused in injection molding for the production of a testing sample and as Unacceptable (CC) when any trouble was encountered.

Herein, troubles refer to unsuccessful molding to the desired product configuration, and include deformation, sink marks, cracks, welds, short shots, burrs and other results such as unassembled cover and gasket.

### (Example 6)

A crosslinked rubber sheet was produced by the procedure illustrated in Example 5, except that 30 parts by weight of the carbon black used in Example 5 was replaced by 30 parts by weight of silica (trade name: Nipsil VN3, available from NIPPON SILICA Industrial Co., Ltd.) as indicated in Table 3.

The crosslinked rubber sheet was tested to determine its hardness, compression set resistance, tensile properties, sealing properties, adhesion properties and molding properties by the aforesaid methods.

The results are set forth in Table 3.

### (Example 7)

A crosslinked rubber sheet was produced by the procedure illustrated in Example 5, except that the ethylene/propylene/5-vinyl-2-norbornene random copolymer rubber (A-1) was replaced by the ethylene/propylene/5-vinyl-2-norbornene random copolymer rubber (A-2) as indicated in Table 1.

The crosslinked rubber sheet was tested to determine its hardness, compression set resistance, tensile properties, sealing properties, adhesion properties and molding properties by the aforesaid methods.

The results are set forth in Table 3.

### (Example 8)

A crosslinked rubber sheet was produced by the procedure illustrated in Example 5, except that the ethylene/propylene/5-vinyl-2-norbornene random copolymer rubber (A-1) was replaced by the ethylene/propylene/5-vinyl-2-norbornene random copolymer rubber (A-3) as indicated in Table 1.

The crosslinked rubber sheet was tested to determine its hardness, compression set resistance, tensile properties, sealing properties, adhesion properties and molding properties by the aforesaid methods.

The results are set forth in Table 3.

### (Comparative Example 2)

100 Parts by weight of the ethylene/propylene/5-vinyl-2-norbornene random copolymer rubber (A-1) indicated in Table 1 and 30 parts by weight of carbon black (trade name: SEAST G-116, available from TOKAI CARBON CO., LTD.) were kneaded together by a 2-liter planetary mixer (trade name: PLM-2, available from INOUE SEISAKUSHO K.K.) to give a blend.

To 130 parts by weight of the blend were added 1.5 parts by weight of sulfur, vulcanization accelerators: 0.5 part by weight of 2-mercaptobenzothiazol (trade name: Sanceler M, available from SANSHIN CHEMICAL INDUSTRY CO., LTD.) and 1.0 part by weight of tetramethylthiuram disulfide (trade name: Sanceler TT, available from SANSHIN CHEMICAL INDUSTRY CO., LTD.), 5 parts by weight of zinc oxide and 1 part by weight of stearic acid. They were kneaded three times by three rolls of 3-inch diameter (trade name: three-roll mill, available from KODAIRA SEISAKUSHO, CO., LTD.), and then pressed by a 50-ton press molding machine at 120°C for 6 minutes. Thus, a crosslinked rubber sheet having a thickness of 2 mm was produced. However, the sheet was so inferior that the properties measurements were impossible.

When the hardness is 70 or more, an extreme reaction force is caused when the cover-gasket assembly is attached to a main body. Consequently, the cover will be deformed and fail to achieve complete sealing. That is, the sealing properties of the gasket become inadequate. Meanwhile, when the hardness is less than 10, the gasket will be prone to breakage and stick together easily, requiring careful handling. Most preferably, the hardness is in the range of 20 to 40.

Nonuse of any adhesive resulted in separation during the molding and integration failed. As described hereinabove, a cover-gasket assembly having very excellent properties can be obtained when the rubber composition has a composition as specified in Examples.

**Table 3**

| | Ex. 5 | Ex. 6 | Ex. 7 | Ex. 8 | Comp. Ex. 2 |
|---|---|---|---|---|---|
| Composition [parts by weight] | | | | | |
| Copolymer rubber (A-1) | 100 | 100 | | | 100 |
| Copolymer rubber (A-2) | | | 100 | | |
| Copolymer rubber (A-3) | | | | 100 | |
| C₆H₅Si(-OSi(CH₃)₂H)₃ [C] | 4 | 4 | 4 | 4 | |
| IPA solution of 2% chloroplatinic acid [D] | 0.1 | 0.1 | 0.1 | 0.1 | |
| Ethynylcyclohexanol [E] | 0.1 | 0.1 | 0.1 | 0.1 | |
| Carbon black | 30 | | 30 | 30 | 30 |
| Silica | | 30 | | | |
| Sulfur | | | | | 1.5 |
| Vulcanization accelerator (Sanceler^{™} M) | | | | | 0.5 |
| Vulcanization accelerator (Sanceler^{™} TT) | | | | | 1 |
| Zinc oxide | | | | | 5 |
| Stearic acid | | | | | 1 |

| Properties of crosslinked rubber sheet | | | | | |
|---|---|---|---|---|---|
| Hardness (JIS durometer A) | 32 | 35 | 37 | 39 | Crosslinking failed |
| Compression set resistance | AA | AA | AA | AA | |
| Tensile strength characteristics | AA | AA | AA | AA | |

| Product evaluation | | | | | |
|---|---|---|---|---|---|
| Sealing properties | AA | AA | AA | AA | |
| Adhesion properties | AA | AA | AA | AA | |
| Molding properties | AA | AA | AA | AA | |

| | | | | | |
|---|---|---|---|---|---|
| Note: IPA in Component [D]: isopropyl alcohol | | | | | |

### (Example 9)

100 Parts by weight of the ethylene/propylene/5-vinyl-2-norbornene random copolymer rubber (A-1) indicated in Table 1 and 25 parts by weight of carbon black (trade name: SEAST G-116, available from TOKAI CARBON CO., LTD.) were kneaded together by a 2-liter planetary mixer (trade name: PLM-2, available from INOUE SEISAKUSHO K.K.) to give a blend (I-3).

To 125 parts by weight of the blend (1-3) were added 4 parts by weight of a compound represented by C₆H₅-Si(OSi(CH₃)₂H)₃ as the SiH group-containing compound [C] (crosslinking agent), 0.1 part by weight of ethynylcyclohexanol as the reaction inhibitor [E], 0.1 part by weight of an isopropyl alcohol solution of 2 wt% chloroplatinic acid as the catalyst [D], and 1 part by weight of an anti-aging agent (trade name: IRGANOX 1010, available from Ciba-Geigy Japan, Ltd.). They were kneaded three times by three rolls of 3-inch diameter (trade name: three-roll mill, available from KODAIRA SEISAKUSHO, CO., LTD.), and then pressed and vulcanized by a 50-ton press molding machine at 150°C for 3 minutes. Thus, a vulcanized rubber sheet (150 mm × 150 mm × 2 mm) was produced. A specimen 11 illustrated in Fig. 3 was prepared from the sheet for testing sealing properties.

With respect to the vulcanized rubber sheet obtained as described above, the properties described below were measured. The results are set forth in Table 4.

### (1) Original properties

The sheet was tested in accordance with JIS K6253 and JIS K6251 to determine its original properties (durometer A hardness, tensile strength and elongation).

### (2) Sealing test

The specimen 11 was set in a jig 12 illustrated in Fig. 4 and initial check for leakage was made. Thereafter, the specimen set in the jig was placed in a 100°C oven and taken out after every 100 hours. Each time a sealing (leakage) test was conducted similarly to the initial check. The test was repeated five times, i.e., 500 hours in the oven.

In the sealing test, the jig 12 in which the specimen 11 was set was placed in a tank 13 containing water 14, and air was supplied at 0.1 MPa as indicated by an arrow 16 to check water leakage from a seal surface 15.

### (3) Outgassing test

The vulcanized rubber sheet, 50 mm × 20 mm × 2 mm, was heated at 100°C for 1 hour, and siloxanes generated were quantitatively determined by headspace gas chromatography/mass spectrometry.

### (Example 10)

A vulcanized rubber sheet was produced and tested by the procedure illustrated in Example 9, except that the carbon black was replaced by white carbon (trade name: Nipsil VN3, available from NIPPON SILICA Industrial Co., Ltd.).

The results are set forth in Table 4.

### (Example 11)

A vulcanized rubber sheet was produced and tested by the procedure illustrated in Example 9, except that the ethylene/propylene/5-vinyl-2-norbornene random copolymer rubber (A-1) was replaced by the ethylene/propylene/5-vinyl-2-norbornene random copolymer rubber (A-2) indicated in Table 1.

The results are set forth in Table 4.

### (Example 12)

A vulcanized rubber sheet was produced and tested by the procedure illustrated in Example 9, except that the ethylene/propylene/5-vinyl-2-norbornene random copolymer rubber (A-1) was replaced by the ethylene/propylene/5-vinyl-2-norbornene random copolymer rubber (A-3) indicated in Table 1.

The results are set forth in Table 4.

### (Comparative Example 3)

100 Parts by weight of the ethylene/propylene/5-vinyl-2-norbornene random copolymer rubber (A-1) indicated in Table 1 and 25 parts by weight of carbon black (trade name: SEAST G-116, available from TOKAI CARBON CO., LTD.) were kneaded together by a 2-liter planetary mixer (trade name: PLM-2, available from INOUE SEISAKUSHO K.K.) to give a blend.

To 125 parts by weight of the blend were added 1.5 parts by weight of sulfur, vulcanization accelerators: 0.5 part by weight of 2-mercaptobenzothiazol (trade name: Sanceler M, available from SANSHIN CHEMICAL INDUSTRY CO., LTD.) and 1.0 part by weight of tetramethylthiuram disulfide (trade name: Sanceler TT, available from SANSHIN CHEMICAL INDUSTRY CO., LTD.), 5 parts by weight of zinc oxide, 1 part by weight of an anti-aging agent (IRGANOX 1010, available from Ciba-Geigy Japan, Ltd.) and 1 part by weight of stearic acid. They were kneaded three times by three rolls of 3-inch diameter (trade name: three-roll mill, available from KODAIRA SEISAKUSHO, CO., LTD.), and then pressed and vulcanized by a 50-ton press molding machine at 150°C for 3 minutes. However, the resultant sheet had so inferior that the properties measurements were impossible and no appropriate sample for the sealing test was obtained.

### (Comparative Example 4)

100 Parts by weight of a silicone rubber (trade name: KE742-U, available from Shin-Etsu Chemical Co., Ltd.) and 4 parts by weight a vulcanizing agent (trade name: C-4, available from Shin-Etsu Chemical Co., Ltd.) were kneaded together by a two-roll mill. The resultant blend was pressed and vulcanized at 165°C for 10 minutes, and secondarily vulcanized at 200°C for 4 hours. Thus, a vulcanized rubber sheet (150 mm × 150 mm × 2 mm) was produced. A specimen for testing sealing properties as illustrated in Fig. 3 was obtained from the sheet.

With respect to the vulcanized rubber sheet, the measurements were carried out by the methods described in Example 9.

The results are set forth in Table 4.

### (Comparative Example 5)

100 Parts by weight of a nitrile rubber (trade name: DN401L, available from ZEON Corporation), 25 parts by weight of white carbon (trade name: Nipsil VN3, available from NIPPON SILICA Industrial Co., Ltd.), 5 parts by weight of zinc oxide, 1 part by weight of an anti-aging agent (trade name: NONFLEX RD, available from Seiko Chemical Co., Ltd.), 15 parts by weight of a plasticizer (trade name: ADK SIZER RS107, available from Asahi Denka Co., Ltd.), 15 parts by weight of a plasticizer (trade name: ADK SIZER P200, available from Asahi Denka Co., Ltd.) and 1 part by weight of dicumyl peroxide were kneaded together by a kneader and a two-roll mill. The resultant blend was pressed and vulcanized at 165°C for 15 minutes. Thus, a vulcanized rubber sheet (150 mm × 150 mm × 2 mm) was produced. A specimen for testing sealing properties as illustrated in Fig. 3 was obtained from the sheet.

With respect to the vulcanized rubber sheet, the measurements were carried out by the methods described in Example 9.

The results are set forth in Table 4.

**Table 4**

| | Ex. 9 | Ex. 10 | Ex. 11 | Ex. 12 | Comp. Ex. 4 | Comp. Ex. 5 |
|---|---|---|---|---|---|---|
| Original properties | | | | | | |
| Hardness (durometer A hardness) | 30 | 33 | 35 | 37 | 40 | 35 |
| Tensile strength [MPa] | 4.8 | 5.4 | 6.9 | 8.3 | 5.7 | 6.9 |
| Elongation [%] | 100 | 140 | 200 | 290 | 330 | 450 |

| Sealing test | | | | | | |
|---|---|---|---|---|---|---|
| Initial | No leak | No leak | No leak | No leak | No leak | No leak |
| After 100 hours | No leak | No leak | No leak | No leak | No leak | No leak |
| After 200 hours | No leak | No leak | No leak | No leak | No leak | No leak |
| After 300 hours | No leak | No leak | No leak | No leak | No leak | No leak |
| After 400 hours | No leak | No leak | No leak | No leak | No leak | Leak |
| After 500 hours | No leak | No leak | No leak | No leak | No leak | Leak |

| Outgassing test | | | | | | |
|---|---|---|---|---|---|---|
| Siloxane quantity | None | None | None | None | 1 mg or more | None |

The above results show that the vulcanized rubber sheets of Examples 9 to 12 have low hardness and sealing properties that are substantially equal to those of a representative low-hardness silicone rubber sheet of Comparative Example 4. Moreover, the vulcanized rubber sheets of these Examples do not generate siloxanes unlike the sheet of Comparative Example 4. Therefore, they do not cause any conduction failures (contact faults). The vulcanized rubber sheet of Comparative Example 4 generated a very large amount of siloxanes, and therefore conduction failures could be caused. The vulcanized rubber sheet of Comparative Example 5 initially exhibited good sealing properties but was found to be inferior in long-term sealing properties.

### INDUSTRIAL APPLICABILITY

The rubber composition as used for preparing top cover gaskets for hard disk drives according to the present invention has high crosslinking rate and good productivity (high-speed moldability).

The HDD cover gasket according to the present invention has a low hardness, good compression set resistance and sufficient heat resistance. Therefore, it is suitable for use in applications such as dust-shielding gaskets for hard disks where excellent high-temperature long-term sealing properties are required. Particularly, the gasket is preferably used in hard disk drives that are of high performance (high rotation) and are exposed to high temperature environment such as in cars. The gasket can be formed integrally with a cover, so that production can be facilitated.

The top cover gasket for hard disk drives according to the present invention gives a hardened product whose durometer A hardness is as low as 45 or below.

## Claims

1. The use of a rubber composition for preparing top cover gaskets for hard disk drives, said rubber composition comprising:
an ethylene/α-olefin/non-conjugated polyene copolymer [A];
an organopolysiloxane [B] having an average composition formula (I) of R¹ₜSiO_{(4-t)/2} wherein R¹ is an unsubstituted or substituted monovalent hydrocarbon group and t is a number ranging from 1.9 to 2.1; and
an SiH group-containing compound [C];
said copolymer [A] and said organopolysiloxane [B] having a weight ratio ([A]:[B]) of 100:0 to 5:95.

2. The use according to Claim 1,
wherein the ethylene/α-olefin/non-conjugated polyene copolymer [A] has:
(i) a mass ratio of ethylene to an α-olefin of 3 to 20 carbon atoms (ethylene/α-olefin) of 35/65 to 95/5;
(ii) an iodine value of 0.5 to 50;
(iii) an intrinsic viscosity [η] of 0.01 to 5.0 dl/g as measured in decalin at 135°C; and
(iv) constituent units of non-conjugated polyene derived from at least one norbornene compound represented by the following formula [I] or [II]: 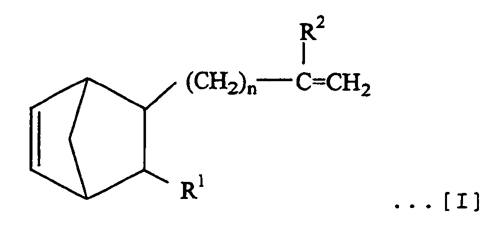
wherein n is an integer of 0 to 10, R¹ is a hydrogen atom or an alkyl group of 1 to 10 carbon atoms, and R² is a hydrogen atom or an alkyl group of 1 to 5 carbon atoms; 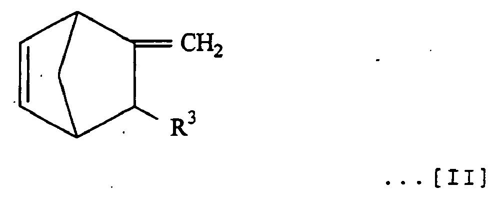 wherein R³ is a hydrogen atom or an alkyl group of 1 to 10 carbon atoms.

3. The use according to Claim 1 or 2, wherein said rubber composition contains a catalyst [D] in addition to the ethylene/α-olefin/non-conjugated polyene copolymer [A], the organopolysiloxane [B] and the SiH group-containing compound [C].

4. The use according to Claim 3, wherein said rubber composition contains a reaction inhibitor [E] in addition to the ethylene/α-olefin/non-conjugated polyene copolymer [A], the organopolysiloxane [B], the SiH group-containing compound [C] and the catalyst [D].

5. A top cover gasket for hard disk drives obtainable by crosslinking the rubber composition as defined in any one of Claims 1 to 4.

6. A top cover gasket for hard disk drives according to Claim 5, wherein the cured product has a durometer A hardness of 45 or less.

7. A top cover gasket for hard disk drives of Claim 5 or 6, which is integrated with a hard disk drive top cover by an adhesive.

8. A hard disk drive including the top cover gasket for hard disk drives as defined in any one of Claims 5 to 7.

## Patentansprüche

1. Verwendung einer Gummizusammensetzung zur Herstellung von Deckeldichtungen für Festplattenlaufwerke, wobei die Gummizusammensetzung umfaßt:
ein Ethylen/α-Olefin/nicht-konjugiertes Polyen-Copolymer [A] ;
ein Organopolysiloxan [B] mit einer mittleren Zusammensetzungsformel (I) R¹ₜSiO_{(4-t)/2}, wobei R¹ eine unsubstituierte oder substituierte monovalente Kohlenwasserstoffgruppe und t eine Zahl im Bereich von 1,9 bis 2,1 ist; und
eine SiH-Gruppen enthaltende Verbindung [C];
wobei das Copolymer [A] und das Organopolysiloxan [B] in einem Gewichtsverhältnis ([A]:[B]) von 100:0 bis 5:95 vorliegen.

2. Verwendung gemäß Anspruch 1, wobei das Ethylen/α-Olefin/nicht-konjugierte Polyen-Copolymer [A]
(i) ein Massenverhältnis von Ethylen zu einem α-Olefin mit 3 bis 20 Kohlenstoffatomen (Ethylen/α-Olefin) von 35/65 bis 95/5;
(ii) eine Iodzahl von 0,5 bis 50;
(iii) eine Grenzviskosität [η] von 0,01 bis 5,0 dl/g, gemessen in Decalin bei 135°C); und
(iv) Bestandteileinheiten eines nicht-konjugierten Polyens, das von wenigstens einer Norbornenverbindung abgeleitet ist, die durch die folgende Formel [I] oder [II] dargestellt werden: 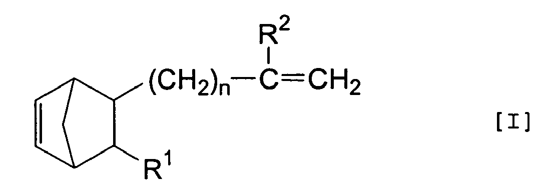 wobei n eine ganze Zahl von 0 bis 10 ist, R¹ ein Wasserstoffatom oder eine Alkylgruppe mit 1 bis 10 Kohlenstoffatomen ist und R² ein Wasserstoffatom oder eine Alkylgruppe mit 1 bis 5 Kohlenstoffatomen ist; 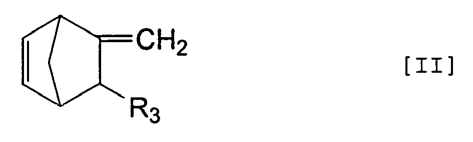 wobei R³ ein Wasserstoffatom oder eine Alkylgruppe mit 1 bis 10 Kohlenstoffatomen ist,
aufweist.

3. Verwendung gemäß Anspruch 1 oder 2, wobei die Gummizusammensetzung einen Katalysator [D] zusätzlich zu dem Ethylen/α-Olefin/nicht-konjugierten Polyen-Copolymer [A], dem Organopolysiloxan [B] und der SiH-Gruppen enthaltenden Verbindung [C] enthält.

4. Verwendung gemäß Anspruch 3, wobei die Gummizusammensetzung einen Reaktionsinhibitor [E] zusätzlich zu dem Ethylen/α-Olefin/nicht-konjugierten Polyen-Copolymer [A], dem Organopolysiloxan [B], der SiH-Gruppen enthaltenden Verbindung [C] und dem Katalysator [D] enthält.

5. Deckeldichtung für Festplattenlaufwerke erhältlich durch Vernetzen der Gummizusammensetzung wie in einem der Ansprüche 1 bis 4 definiert.

6. Deckeldichtung für Festplattenlaufwerke gemäß Anspruch 5, wobei das vernetzte Produkt eine Durometer A-Härte von 45 oder weniger aufweist.

7. Deckeldichtung für Festplattenlaufwerke gemäß Anspruch 5 oder 6, die durch ein Klebemittel mit einem Festplattenlaufwerksdeckel verbunden wird.

8. Festplattenlaufwerk umfassend die Deckeldichtung für Festplattenlaufwerke wie in einem der Ansprüche 5 bis 7 definiert.

## Revendications

1. Utilisation d'une composition de caoutchouc pour préparer des joints statiques de capot supérieur pour lecteurs de disque dur, ladite composition de caoutchouc comprenant :
un copolymère d'éthylène/α-oléfine/polyène non conjugué [A] ;
un organopolysiloxane {B] ayant une formule de composition moyenne (I) de R¹ₜSiO_{(4-t)/2} dans laquelle R¹ est un groupement hydrocarbure monovalent non substitué ou substitué et t est un nombre dans la plage de 1,9 à 2,1 ; et
un composé contenant un groupement SiH [C] ;
ledit copolymère [A] et ledit organopolysiloxane {B] ayant un rapport en poids ([A]:[B]) de 100:0 à 5:95.

2. Utilisation selon la revendication 1,
dans laquelle le copolymère d'éthylène/α-oléfine/polyène non conjugué [A] a :
(i) un rapport en masse de l'éthylène sur une α-oléfine de 3 à 20 atomes de carbone (éthylène/α-oléfine) de 35/65 à 95/5 ;
(ii) un indice d'iode de 0,5 à 50 ;
(iii) une viscosité intrinsèque [η] de 0,01 à 5,0 dl/g telle que mesurée dans la décaline à 135°C ; et
(iv) des unités constitutives de polyène non conjugué dérivées d'au moins un composé de norbornène représenté par la formule [1] ou [2] suivante : 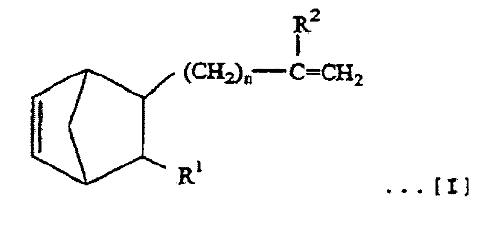
dans laquelle n est un entier de 0 à 10, R¹ est un atome d'hydrogène ou un groupement alkyle de 1 à 10 atomes de carbone, et R² est un atome d'hydrogène ou un groupement alkyle de 1 à 5 atomes de carbone ; 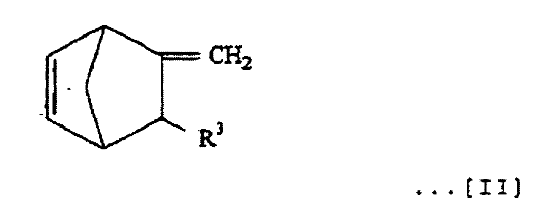 dans laquelle R³ est un atome d'hydrogène ou un groupement alkyle de 1 à 10 atomes de carbone.

3. Utilisation selon la revendication 1 ou 2, dans laquelle ladite composition de caoutchouc contient un catalyseur [D] en plus du copolymère d'éthylène/α-oléfine/polyène non conjugué [A], de l'organopolysiloxane [B] et du composé contenant un groupement SiH [C].

4. Utilisation selon la revendication 3, dans laquelle ladite composition de caoutchouc contient un inhibiteur de réaction [E] en plus du copolymère d'éthylène/α-oléfine/polyène non conjugué [A], de l'organopolysiloxane [B], du composé contenant un groupement SiH [C] et du catalyseur [D].

5. Joint statique de capot supérieur pour lecteurs de disque dur pouvant être obtenu en réticulant la composition de caoutchouc selon l'une quelconque des revendications 1 à 4.

6. Joint statique de capot supérieur pour lecteurs de disque dur selon la revendication 5, dans lequel le produit durci a une dureté A au duromètre de 45 ou moins.

7. Joint statique de capot supérieur pour lecteurs de disque dur selon la revendication 5 ou 6, qui est intégré avec le capot supérieur d'un lecteur de disque dur par un adhésif.

8. Lecteur de disque dur incluant le joint statique de capot supérieur pour lecteurs de disque dur selon l'une quelconque des revendications 5 à 7.
